# EUROPÄISCHE PATENTSCHRIFT

(11) **EP 3 221 141 B1**
(45) Veröffentlichungstag und Bekanntmachung des Hinweises auf die Patenterteilung: **18.11.2026**
(21) Anmeldenummer: 15802007.3
(22) Anmeldetag: 19.11.2015
(51) Int. Cl.: B32B 7/022, B32B 9/02, B32B 9/04, B32B 27/08, B32B 27/18, B32B 27/30, B32B 27/36

(54) **BIOLOGISCH ABBAUBARE MEHRSCHICHTFOLIE**
BIODEGRADABLE MULTI-LAYER FILM
FILM MULTICOUCHES BIODÉGRADABLE

(30) Priorität: 19.11.2014 DE 102014017015
(43) Veröffentlichungstag der Anmeldung: 27.09.2017
(73) Patentinhaber: BIOTEC Biologische Naturverpackungen GmbH & Co. KG, 46446 Emmerich (DE)
(72) Erfinder: HACKFORT, Ralf, 46446 Emmerich (DE); MATHAR, Johannes, 7041 GP's-Heerenberg (NL); RÖRTHMANS, Frank, 47661 Issum-Sevelen (DE); SCHMIDT, Harald, 46446 Emmerich (DE); HESS, Christoph, 46459 Rees (DE)
(74) Vertreter: Cohausz & Florack
(86) Internationale Anmeldenummer: PCT/EP2015/077112
(87) Internationale Veröffentlichungsnummer: WO 2016/079244

(56) Entgegenhaltungen:
- WO-A1-2009/049667
- WO-A2-2012/066436
- DE-U1- 202010 005 911

## Beschreibung

Die Erfindung betrifft eine mehrschichtige Polymerfolie sowie ein Verfahren zu ihrer Herstellung. Ferner betrifft die Erfindung die Verwendung der mehrschichtigen Polymerfolie zur Herstellung von Formteilen, Verpackungsfolien oder Tüten, insbesondere von Kunststoff-Tragetaschen. Die Erfindung betrifft schließlich auch Formteile, Folien und Tüten, die aus den erfindungsgemäßen mehrschichtigen Polymerfolien hergestellt sind.

Unter dem Gesichtspunkt der Schonung fossiler Ressourcen, der Abfallentsorgung und Minderung der CO₂-Emissionen ist es wünschenswert, die weit verbreiteten herkömmlichen Kunststoffe auf Basis von fossilen Rohstoffquellen durch Kunststoffe zu ersetzen, die zumindest teilweise oder vollständig aus nachwachsenden Rohstoffen gewonnen werden können. Polymere, die zumindest teilweise oder vollständig auf nachwachsenden Rohstoffen basieren, werden auch "biobasierte" Polymere genannt.

Biologisch abbaubare Kunststoffe sind nicht zwangsläufig auch gleichzeitig biobasiert. So gibt es einige Kunststoffe aus fossilen, nicht nachwachsenden Ressourcen, die biologisch abbaubar sind. Die biologische Abbaubarkeit ist in der Regel nicht an die Rohstoffbasis gebunden, sondern hängt im Wesentlichen ab von der chemischen Struktur des Werkstoffs und seinem Vermögen, sich durch biologische Aktivität in natürlich vorkommende Stoffwechselendprodukte umzuwandeln.

In der Praxis haben sich Polymerzusammensetzungen auf Basis von Stärke und aromatisch-aliphatischen Copolyestern als biologisch abbaubare Polymerzusammensetzungen mit hervorragenden mechanischen Eigenschaften bewährt.

Neben Stärke und Stärkederivaten sind auch Polyhydroxyalkanoate (PHA) vielversprechende biobasierte Ersatzmaterialien für Polymere, die fossilen Ursprungs sind. PHAs sind natürlich vorkommende lineare Polyester aus Hydroxysäuren, die von vielen Bakterien als Reservestoffe für Kohlenstoff und Energie gebildet werden und in Form von Granula im Zellinneren abgelagert werden. Aus dem Stand der Technik ist die industrielle biotechnologische PHA-Erzeugung unter Verwendung von natürlichen oder genetisch modifizierten Bakterienstämmen oder Pflanzen bekannt. Eine Übersicht zu den verschiedenen PHAs und ihrer Herstellung bietet das Kapitel "Polyhydroxyalkanoates" in "Handbook of Biodegradable Polymers", Seiten 219 bis 256, Verlag Rapra Technologies Limited, 2005.

Die Hauptanwendungen biologisch abbaubarer Polymerzusammensetzungen liegen im Verpackungs- und Cateringbereich. Daneben existieren Anwendungen in der Landwirtschaft und im Gartenbau sowie im Pharma- und Medizinbereich. Besonders relevant sind biologisch abbaubare Polymerzusammensetzungen für die Fertigung von Abfallsäcken, Tragetaschen, Einweggeschirr (Becher, Tassen, Teller, Besteck), Verpackungsfolien, Flaschen, Obst- und Gemüseschalen (so genannte Trays), Verpackungshilfsmitteln (Loose-fill-Chips), Mulchfolien, Blumentöpfen und dergleichen.

Gerade Tragetaschen und Verpackungsfolien stellen eine bedeutende Verschmutzungsquelle für Gewässer und Meere dar. Da viele der heutzutage eingesetzten Tragetaschen nicht biologisch abbaubar sind, nimmt die Verschmutzung der Gewässer und Meere mit Kunststoffen immer mehr zu. Tragetaschen aus nicht biologisch abbaubaren Kunststoffen stellen eine Gefahr für Gewässer- und Meerestiere dar, da die Tiere sich in diesen Tragetaschen verfangen können und dadurch in ihrer Mobilität stark eingeschränkt werden oder gar ersticken. In kleinere Bestandteile zerlegte Tragetaschen stellen ebenfalls ein Problem dar, da diese Bestandteile von den Tieren gefressen werden, von den Tieren aber nicht abgebaut werden können.

Aber auch die bis jetzt eingesetzten Tragetaschen aus biologisch abbaubaren Kunststoffen lösen das Problem der Gewässer- und Meeresverschmutzung mit Kunststoffen noch nicht. Normalerweise werden die biologisch abbaubaren Kunststoffe für die Tragetaschen unter speziellen Bedingungen auf ihre Abbaubarkeit hin getestet, die in industriellen Kompostieranlagen herrschen. Unter anderem herrschen dort Temperaturen von ca. 58°C, und es werden gezielt spezielle Mikroorganismen für den biologischen Abbau eingesetzt. Diese Bedingungen begünstigen den biologischen Abbau der Kunststoffe sehr stark. In Gewässern oder im Meer sind solche für den biologischen Abbau günstigen Bedingungen jedoch nicht anzutreffen. Ein weiterer Unterschied besteht in der Verfügbarkeit von Sauerstoff. Während in industriellen Kompostieranlagen der Sauerstoffgehalt kontrolliert und für optimale Bedingungen eingestellt werden kann, kann vor allem im Meer in bestimmten Schichten ein Sauerstoffmangel vorliegen, der den biologischen Abbau stark verlangsamt. Daher bauen sich auch Tragetaschen aus biologisch abbaubaren Kunststoffen in Gewässern oder Meeren nicht notwendigerweise so schnell ab, dass sie keine Gefahr für Gewässer- und Meerestiere darstellen.

Die Aufgabe, die sich aus dem voranstehend Geschilderten ergibt, besteht in zwei scheinbar gegenläufigen Aspekten. Zum einen soll eine Folie verfügbar sein, die günstig herzustellen ist, sich einfach verarbeiten lässt und für Tragetaschen und/oder Verpackungsfolien eine für den Gebrauch unter verschiedenen Witterungsbedingungen ausreichende Stabilität aufweist. Zum anderen sollen die Tragetasche und/oder die Verpackungsfolie keine Gefahr für Gewässer- und Meerestiere darstellen und sich daher in wässriger Lösung schnell zersetzen und/oder biologisch abbauen.

Dabei ist vorgesehen, dass derartige Folien der für sie vorgesehenen, geregelten Entsorgung, beispielsweise Kompostieranlagen, zugeführt werden. Im Falle von fehlgeleiteten Produkten aus derartigen Folien sollen sie nicht dauerhaft zu einer Verschmutzung von Gewässern und/oder Meeren beitragen.

Im Stand der Technik sind verschiedene Folien bekannt, die teilweise biologisch abbaubar sind.

So wird in der WO 2012/066436 A2 ein mehrlagiger Film beschrieben, der eine wasserlösliche Schicht und eine wasserundurchlässige Schicht enthält. Die wasserundurchlässige Schichten soll (in industriellen Anlagen) unter aeroben Bedingungen biologisch abbaubar sein, die wasserlösliche Schicht kann biologisch abbaubare Kunststoffe enthalten. Über die biologische Abbaubarkeit unter erschwerten Bedingungen, wie zum Beispiel unter anaeroben Bedingungen oder in wässriger Lösung, wird keine Aussage gemacht.

Die US 2007/0149708 A1 beschreibt ein polymeres Material, das durch gleichzeitiges Polymerisieren von wasserabsorbierenden Polymerpartikeln mit einem Monomer wie Styrol, Ethylen, Chloroethylen oder Vinylactetat erhalten wird.

Die US 8,227,059 B2 beschreibt einen zweilagigen Film für Exkrementbeutel, der ein Enzym enthält und aus einer wasserunlöslichen Schicht sowie einer sich in Wasser zersetzenden Schicht besteht. Die wasserunlösliche Schicht soll in Wasser durch das Enzym abgebaut werden. Über die mechanischen Eigenschaften des Films wird keine Aussage gemacht.

Die WO 2009/049667 A1 beschreibt eine Mehrschichtfolie, insbesondere für Verpackungszwecke, welche mindestens eine erste Schicht A und mindestens eine zweite Schicht B umfasst, wobei die Schicht A thermoplastischen Polyester und die Schicht B thermoplastische Stärke enthält und wobei Schicht B Schicht B neben thermoplastischer Stärke kein weiteres biologisch abbaubares thermoplastisches Polymer enthält.

Aus der DE 20 2010 005 911 U1 ist eine vollständig biologisch abbaubare Mehrschichtfolie umfassend (a) wenigstens eine vollständig biologisch abbaubare Haft-vermittlerschicht (a) basierend auf wenigstens einem funktionalisierten, vollständig biologisch abbaubaren Polymeren und (b) wenigstens eine vorzugsweise innenliegende, vollständig biologisch abbaubare Barriereschicht (b) bekannt.

Den im Stand der Technik beschriebenen Lösungen ist der Nachteil gemein, dass entweder die mechanischen Eigenschaften im Gebrauch oder die Zersetzung und der biologische Abbau in wässriger Lösung unzureichend sind.

Ausgehend von dem zuvor beschriebenen Stand der Technik bestand eine Aufgabe der Erfindung darin, eine Folie bereit zu stellen, die günstig herzustellen ist. Ferner soll sich die Folie einfach verarbeiten lassen. Außerdem soll die Folie für Tragetaschen und/oder Folien eine für den Gebrauch unter verschiedenen Witterungsbedingungen ausreichende mechanische Stabilität aufweisen. Zudem soll eine Tragetasche und/oder Folie, die aus der Folie hergestellt wurde, keine Gefahr für Gewässer- und Meerestiere darstellen. Dafür soll sich die Folie in wässriger Lösung vorzugsweise innerhalb weniger Tage in kleinere Bestandteile zersetzen. Die Bestandteile können sich dann über einen längeren Zeitraum biologisch abbauen, insbesondere vollständig biologisch abbauen.

Diese Aufgabe wird durch die in Anspruch 1 angegebene Polymerfolie, die in Anspruch 10 angegebene Verwendung, sowie die in Anspruch 11 angegebenen Erzeugnisse gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Die erfindungsgemäße mehrschichtige Polymerfolie umfasst mindestens eineMittelschicht A, deren polymere Bestandteile in wässriger Lösung löslich sind, und jeweils mindestens eine, oberhalb und unterhalb der mindestens einen Mittelschicht A angeordnete, im wesentlichen wasserundurchlässige Deckschicht B, C, wobei die Schichten A, B und C unabhängig voneinander jeweils mindestens ein thermoplastisches Polymer enthalten, wobei die SchichtA eine Zugfestigkeit gemäß EN ISO 527 von mindestens 15 MPa aufweist und die Schichten B und C jeweils eine Zugfestigkeit gemäß EN ISO 527 von mindestens 20 MPa aufweisen, wobei mindestens eine der Deckschichten B und/oder C Polyvinylalkohol enthält.

Mindestens eine der Deckschichten B und C der erfindungsgemäßen mehrschichtigen Polymerfolie können ferner mindestens ein Polyhydroxyalkanoat enthalten. Überraschend hat sich gezeigt, dass die Verwendung von Polyhydroxyalkanoaten in mindestens einer der Deckschichten dazu führt, dass sich die Polymerfolie in wässriger Lösung innerhalb weniger Tage in kleinere Bestandteile zersetzen kann. Wahrscheinlich entstehen zunächst in mindestens einer der Deckschichten Risse, durch welche vermutlich die wässrige Lösung die in wässriger Lösung löslichen Bestandteile der Mittelschicht angreifen kann. In der Folge zersetzt sich die Polymerfolie als Ganzes in kleinere Bestandteile. Ohne an eine wissenschaftliche Theorie gebunden sein zu wollen, erscheint sich diese überraschende Wirkung durch die Neigung von Polyhydroxyalkanoaten zur Nachkristallisation erklären zu lassen. Materialien, die Polyhydroxyalkanoate enthalten, werden dadurch üblicherweise nach mehreren Tagen brüchig und spröde, weshalb geringe äußere Einflüsse zu Rissen in diesen Materialien führen können.

Nach der Zersetzung können die einzelnen Bestandteile biologisch abgebaut, insbesondere vollständig biologisch abgebaut werden.

Wenn hier oder an anderer Stelle von wässriger Lösung die Rede ist, so ist damit reines Wasser oder ein Gemisch gemeint, das Wasser enthält. In der wässrigen Lösung kann Wasser insbesondere in einer Menge von mindestens 50 Vol.%, insbesondere mindestens 90 Vol.%, oder mehr enthalten sein. Die wässrige Lösung kann ferner gelöste Bestandteile wie z.B. Salze enthalten. Beispiele für wässrige Lösungen sind neben destilliertem Wasser vor allem Süßwasser und Meerwasser.

Die Löslichkeit polymerer Bestandteile in wässriger Lösung kann beispielsweise bestimmt werden, indem der Massenverlust einer Probe der polymeren Bestandteile durch einfaches Wiegen bestimmt wird, nachdem die Probe einer definierten Menge einer wässrigen Lösung bei einer definierten Temperatur für eine definierte Zeit ausgesetzt war. Löslich im Sinne der Erfindung kann insbesondere bedeuten, dass ein Massenverlust von 100% festgestellt wird, wenn 1 g der Probe 50 mL einer wässrigen Lösung bei 100°C für 5 Minuten ausgesetzt wird.

Wenn hier oder an anderer Stelle von Zersetzen die Rede ist, so kann damit insbesondere der Zerfall der Ausgangsstruktur in Teile, insbesondere in kleinere Bestandteile, gemeint sein. Zersetzen im Sinne der Erfindung kann insbesondere auch Auflösen und die chemische oder biologische Zersetzung in kleinere Moleküle oder die Umwandlung in chemische oder biologische Abbauprodukte einschließen.

Die Wasserundurchlässigkeit kann beispielsweise nach DIN EN 20811:1992 bestimmt werden. Wasserundurchlässig im Sinne der Erfindung kann insbesondere bedeuten, dass die Schicht mindestens 20 mm, insbesondere mindestens 50 mm, mindestens 100 mm, mindestens 200 mm, mindestens 500 mm, mindestens 1000 mm oder mindestens 1500 mm, Wassersäule standhält. Die Messung kann beispielsweise bei einer Schichtdicke von 20 µm erfolgen.

In einer bevorzugten Ausführungsform der Erfindung ist das Polyhydroxyalkanoat in der erfindungsgemäßen Polymerfolie in mindestens einer der Deckschichten B und/oder C in einer Menge von mindestens 10 Gew.%, insbesondere mindestens 15 Gew.% oder mindestens 20 Gew.% enthalten, bezogen auf das Gesamtgewicht der jeweiligen Deckschicht. Bei einer Verwendung des Polyhydroxyalkanoats in diesen Mengen weist die resultierende Polymerfolie gute mechanische Eigenschaften auf und zersetzt sich in wenigen Tagen in wässriger Lösung.

Wenn hier von Polyhydroxyalkanoat die Rede ist, so sind damit Ester von Polyhydroxyfettsäuren gemeint, die Monomere mit einer Kettenlänge von mindestens 4 C-Atomen, insbesondere von 4 bis 18 C-Atomen oder von 4 bis 9 C-Atomen, enthalten. Polymilchsäure ist somit z.B. kein Polyhydroxyalkanoat im Sinne der Erfindung, Poly-3-hydroxybutyrat (PHB) oder Poly-4-hydroxybutyrat (P4HB) hingegen schon.

Erfindungsgemäß wird als Polyhydroxyalkanoat vorzugsweise ein Polyhydroxyalkanoat eingesetzt, das sich wiederholende Monomereinheiten der Formel (1) umfasst

[-O-CHR-CH₂-C(O)-] (1) ,

wobei R eine Alkylgruppe der Formel CₙH₂ₙ₊₁ bedeutet und n eine Zahl von 1 bis 15, bevorzugt von 1 bis 6 ist.

Für viele Anwendungszwecke besonders geeignet ist es, wenn das jeweils mindestens eine thermoplastische Polymer der Deckschichten B und/oder C der erfindungsgemäßen Polymerfolie hydrolytisch zersetzbar ist. Auf diese Weise kann sichergestellt werden, dass sich auch die polymeren Bestandteile der Polymerfolie in Wasser zersetzen können.

Erfindungsgemäß enthält mindestens eine der Deckschichten B und/ oder C Polyvinylalkohol als thermoplastisches Polymer.

Als besonders praktikabel hat es sich ferner erwiesen, wenn in der erfindungsgemäßen Polymerfolie das jeweils mindestens eine thermoplastische

Polymer der Deckschichten B und/oder C unabhängig voneinander ausgewählt ist aus der Gruppe bestehend aus thermoplastische Stärke, stärkehaltige Thermoplaste, Polyvinylalkohol, thermoplastischer Polyvinylalkohol, Polyvinylacetat, Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat), Polymilchsäure, Polycaprolacton, Polybutylensuccinat, Poly(butylenadipat-co-succinat), aromatisch-aliphatischer Copolyester, Poly(butylenadipat-co-terephthalat), Poly(butylensebacat-co-terephthalat) und Mischungen davon.

Mindestens eine der Deckschichten B und/oder C der erfindungsgemäßen Polymerfolie kann gemäß einer vorteilhaften Ausführungsform der Erfindung 5 bis 70 Gew.%, vorzugsweise 10 bis 70 Gew.%, vorzugsweise 20 bis 70 Gew.%, vorzugsweise 20 bis 65 Gew.%, weiter bevorzugt 20 bis 60 Gew.%, besonders bevorzugt 30 bis 58 Gew.%, noch bevorzugter 30 bis 55 Gew.%, am bevorzugtesten 30 bis 50 Gew.% aliphatisch-aromatischen Copolyester enthalten, jeweils bezogen auf das Gesamtgewicht der Deckschicht. Wenn hier von "aliphatisch-aromatischem Copolyester" die Rede ist, so sind damit auch Mischungen verschiedener aliphatisch-aromatischer Copolyester umfasst.

Vorteilhafterweise umfasst mindestens eine der Deckschichten B und/oder C der erfindungsgemäßen Polymerfolie aliphatisch-aromatische Copolyester, die gemäß EN 13432 biologisch abbaubar sind und/oder eine Glasübergangstemperatur (Tg) kleiner 0°C, insbesondere kleiner -4°C, weiter bevorzugt kleiner -10°C, noch weiter bevorzugt kleiner -20°C und am bevorzugtesten kleiner -30°C aufweisen. Vorzugsweise sind die in mindestens einer der Deckschichten der erfindungsgemäßen Polymerfolie umfassten aliphatisch-aromatischen Copolyester, soweit vorhanden, ferner thermoplastisch.

Gemäß einer besonders bevorzugten Ausführungsform der Erfindung wird als aliphatisch-aromatischer Copolyester, ein statistischer Copolyester auf Basis von mindestens Adipinsäure und/oder Sebacinsäure und/oder Bernsteinsäure eingesetzt. Weiter bevorzugt handelt es sich um einen Copolyester bzw. statistischen Copolyester auf Basis von 1,4-Butandiol, Adipinsäure,und/oder Sebacinsäure und/oder Bernsteinsäure und Terephthalsäure und/oder Terephthalsäurederivat (z. B. Dimethylterephthalat DMT). Dieser kann insbesondere eine Glasübergangstemperatur (Tg) von -25 bis -40 °C, insbesondere -30 bis -35 °C, und/oder einen Schmelzbereich von 100 bis 120 °C, insbesondere 105 bis 115 °C, aufweisen.

Optimale Ergebnisse stellen sich ein, wenn in der erfindungsgemäßen Polymerfolie das Polyhydroxyalkanoat in mindestens einer der Deckschichten B und/oder C ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat) und Mischungen davon. Derartige Polymerfolien zeigen gute mechanische Eigenschaften und zersetzen sich gut in wässriger Lösung.

Besonders bevorzugt ist es, wenn in der Polymerfolie das Polyhydroxyalkanoat in mindestens einer der Deckschichten B und/oder C ausgewählt ist aus der Gruppe bestehend aus Poly(3-hydroxybutyrat) (PHB), 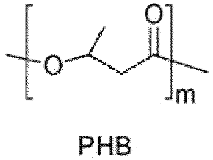 und Poly(3-hydroxybutyrat-co-3-hydroxyhexanoat)(PHBH) 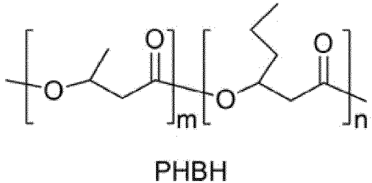 und Mischungen daraus.

Besonders gute Ergebnisse stellen sich ein, wenn das Verhältnis m:n in obiger Strukturformel von 95:5 bis 85:15 beträgt, insbesondere von 90:10 bis 88:12. Gemäß einer besonders bevorzugten Ausführungsform enthält das Polyhydroxyalkanoat PHBH oder besteht daraus. Praktische Versuche haben gezeigt, dass ein PHBH mit einem Molanteil 3-Hydroxyhexanoat von 5 bis 15 Mol%, vorzugsweise 7 bis 13 Mol% oder 10 bis 13 Mol%, jeweils bezogen auf die Gesamtmenge PHBH, sehr gute Ergebnisse liefert.

Polyhydroxyalkanoate im Sinne dieser Erfindung weisen insbesondere zahlenmittlere Molekulargewichte MW von 70 000 bis 1 000 000 g/mol, vorzugsweise von 100 000 bis 1 000 000 g/mol, vorzugsweise noch bevorzugt von 300 000 bis 600 000 g/mol und/oder Schmelzpunkte im Bereich von 100 bis 190 °C auf.

Die Herstellung von Polyhydroxyalkanoaten ist allgemein bekannt. Gemäß einer bevorzugten Ausführungsform der Erfindung wird das Polyhydroxyalkanoat in mindestens einer der Deckschichten B und/oder C der erfindungsgemäßen Polymerfolie durch Mikroorganismen in einem Fermentationsprozess und/oder durch chemische Synthese hergestellt.

Vorzugsweise enthalten die Deckschichten B und C der erfindungsgemäßen Polymerfolie jeweils mindestens ein Polyhydroxyalkanoat.

Gemäß einer bevorzugten Ausführungsform der Erfindung ist das mindestens eine thermoplastische Polymer der Deckschichten B und/oder C in der erfindungsgemäßen Polymerfolie das Polyhydroxyalkanoat. Derartige Deckschichten liefern gute Ergebnisse.

Gemäß einer Ausführungsform der Erfindung enthalten die Deckschichten B und/oder C Stärke, Stärkederivat, destrukturierte Stärke und/oder thermoplastische Stärke vorzugsweise in einer Menge von jeweils oder insgesamt weniger als 10 Gew.%, weiter bevorzugt weniger als 8 Gew.%, weiter bevorzugt weniger als 5 Gew.%, weiter bevorzugt weniger als 3 Gew.%, noch weiter bevorzugt weniger als 1 Gew.%, bezogen auf das Gesamtgewicht der jeweiligen Deckschicht. Vorteilhafterweise enthalten die Deckschichten B und/oder C keine Stärke, Stärkederivat, destrukturierte Stärke und/oder thermoplastische Stärke.

Für viele Anwendungszwecke ist es vorteilhaft, wenn die Deckschichten B und C in der erfindungsgemäßen Polymerfolie gemäß ASTM D6866 jeweils mindestens 40%, insbesondere mindestens 45% oder 50% biobasierten Kohlenstoff enthalten, bezogen auf die Gesamtmenge an Kohlenstoff der jeweiligen Deckschichten. Dies führt zusätzlich zu einer nachhaltigen Polymerfolie.

Praktische Versuche haben gezeigt, dass es vorteilhaft ist, wenn die Deckschichten B und/oder C der erfindungsgemäßen Polymerfolie gemäß ISO 15985 und/oder gemäß ISO 14855 zu jeweils mindestens 40%, insbesondere mindestens 45% oder mindestens 50%, weiter bevorzugt mindestens 60%, weiter bevorzugt mindestens 70%, noch weiter bevorzugt mindestens 80%, weiter bevorzugt mindestens 90%, am bevorzugtesten mindestens 95%, biologisch abbaubar sind. Derartige Folien zeigen eine vorteilhafte biologische Abbaubarkeit.

Vorzugsweise ist die Mittelschicht A der erfindungsgemäßen Polymerfolie gemäß ISO 15985 und/oder gemäß ISO 14855 zu mindestens 40%, insbesondere mindestens 50%, bevorzugt mindestens 60%, weiter bevorzugt mindestens 70%, weiter bevorzugt mindestens 80%, noch weiter bevorzugt mindestens 90%, am bevorzugtesten mindestens 95%, biologisch abbaubar. Diese Folien liefern besonders gute Ergebnisse hinsichtlich ihrer biologischen Abbaubarkeit.

Gemäß einer bevorzugten Ausführungsform der erfindungsgemäßen Polymerfolie sind die Deckschichten B und/oder C gemäß EN 13432 biologisch abbaubar, insbesondere vollständig abbaubar. Vorteilhafterweise ist die Mittelschicht A der erfindungsgemäßen Polymerfolie gemäß EN 13432 biologisch abbaubar, insbesondere vollständig biologisch abbaubar. Optimale Ergebnisse werden erhalten, wenn die erfindungsgemäße Polymerfolie gemäß EN 13432 biologisch abbaubar, insbesondere vollständig biologisch abbaubar, ist. Dies eröffnet die Möglichkeit, die Polymerfolie beispielsweise auch für Abfallsäcke, die in einer industriellen Kompostieranlage abgebaut werden, einzusetzen.

Als das mindestens eine thermoplastische Polymer der Mittelschicht A können grundsätzlich die verschiedensten Substanzen eingesetzt werden. Zweckmäßig ist es insbesondere, wenn in der erfindungsgemäßen Polymerfolie das mindestens eine thermoplastische Polymer der Mittelschicht A ausgewählt ist aus der Gruppe bestehend aus thermoplastische Stärke, stärkehaltige Thermoplaste, Polyvinylalkohol, thermoplastischer Polyvinylalkohol, Polyvinylacetat, Polyethylenglykol, Celluloseacetat, Ethylcellulose, Hydroxypropylcellulose, Hydroxypropylmethylcellulose, Poly(vinylpyrrolidon), Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat), Polymilchsäure, Polycaprolacton, Polybutylensuccinat, Poly(butylenadipat-co-succinat), aromatisch-aliphatischer Copolyester, Poly(butylenadipat-co-terephthalat), Poly(butylensebacatco-terephthalat) und Mischungen davon.

Weiter bevorzugt ist das mindestens eine thermoplastische Polymer der Mittelschicht A ausgewählt aus der Gruppe bestehend aus thermoplastische Stärke, stärkehaltige Thermoplaste, Polyvinylalkohol, thermoplastischer Polyvinylalkohol, Polyethylenglykol, Celluloseacetat, Ethylcellulose, Hydroxypropylcellulose, Hydroxypropylmethylcellulose, Poly(vinylpyrrolidon) und Mischungen davon.

Ist das mindestens eine thermoplastische Polymer der Mittelschicht A Celluloseacetat, so weist das Celluloseacetat vorteilhafterweise einen Substitutionsgrad von 0,6 bis 0,8, bevorzugt von 0,7, auf. Ist das mindestens eine thermoplastische Polymer der Mittelschicht A Ethylcellulose, so weist die Ethylcellulose vorteilhafterweise einen Substitutionsgrad von 1,0 bis 1,5 auf. Ist das mindestens eine thermoplastische Polymer der Mittelschicht A Hydroxypropylcellulose, so weist die Hydroxypropylcellulose vorteilhafterweise einen Substitutionsgrad von 1,0 bis 4,0, insbesondere von 1,5 bis 3,0, auf. Ist das mindestens eine thermoplastische Polymer der Mittelschicht A Hydroxypropylmethylcellulose, so weist die Hydroxypropylmethylcellulose vorteilhafterweise einen Substitutionsgrad von 1,0 bis 3,0, insbesondere von 1,5 bis 2,0, auf. Dabei kann bei Hydroxypropylmethylcellulose entweder der Anteil an Methylgruppen oder der Anteil an Hydroxypropylgruppen überwiegen. Unter dem Substitutionsgrad einer betrachteten chemischen Verbindung versteht der Fachmann insbesondere, wie viele Atome oder Atomgruppen einer Art X durch andere gleiche Atome oder Atomgruppierungen R in einem Molekül ersetzt wurden. Im Zusammenhang mit Cellulosederivaten wie Celluloseacetat, Ethylcellulose, Hydroxypropylcellulose und Hydroxypropylmethylcellulose versteht der Fachmann unter dem Substitutionsgrad insbesondere, wie viele der OH-Gruppen durch Acetat-, Ethoxy-, 2-Hydroxypropoxy- oder Methoxygruppen ersetzt wurden.

Gemäß einer weiteren Ausführungsform ist das mindestens eine thermoplastische Polymer der Mittelschicht A ausgewählt aus der Gruppe bestehend aus Polyvinylalkohol, thermoplastischer Polyvinylalkohol, Polyethylenglykol, Celluloseacetat, Ethylcellulose, Hydroxypropylcellulose, Hydroxypropylmethylcellulose, Poly(vinylpyrrolidon) und Mischungen davon.

Gemäß einer Ausführungsform enthält die Mittelschicht A vorzugsweise keine Stärke, Stärkederivat, destrukturierte Stärke und/oder thermoplastische Stärke.

Die erfindungsgemäße Polymerfolie kann vorteilhafterweise in mindestens einer der beiden Deckschichten B und/oder C und/oder in der Mittelschicht A Stärke enthalten. Erfindungsgemäß kann die Stärke native oder modifizierte Stärke umfassen. Vorzugsweise ist die zur Herstellung der erfindungsgemäßen Polymerfolie verwendete Stärke aus Kartoffel, Mais, Tapioka oder Reis gewonnen. Als modifizierte Stärke wird vorzugsweise Stärke eingesetzt, deren freie OH-Gruppen zumindest teilweise substituiert sind. In Frage kommt beispielsweise mit Ether und/oder Estergruppen modifizierte Stärke. Weitere Beispiele für geeignete modifizierte Stärke sind hydrophobierte oder hydrophilisierte Stärke, insbesondere z.B. Hydroxypropyl-Stärke oder Carboxymethylstärke.

Soweit vorhanden liegt die in der erfindungsgemäßen Polymerfolie enthaltene Stärke oder die modifizierte Stärke vorzugsweise in destrukturierter Form vor. Destrukturiert bedeutet dabei, dass die granuläre, kristalline Struktur von nativer Stärke vollständig oder zumindest weitestgehend zerstört worden ist. Dies lässt sich beispielsweise bei Betrachtung von Blendquerschnitten im Rasterelektronenmikroskop leicht feststellen. Alternativ kann die Stärkephase der Polymerfolie isoliert werden und unter einem Polarisationsmikroskop auf das Vorhandensein von kristallinen Bestandteilen hin untersucht werden. Destrukturierte Stärke ist vorzugsweise im Wesentlichen frei von kristallinen Bestandteilen.

Destrukturierte Stärke kann zweckmäßigerweise in Form von (ggf. vorgefertigter) thermoplastischer Stärke bzw. thermoplastisch verarbeitbarer Stärke (TPS) in der erfindungsgemäßen Polymerfolie vorliegen.

Thermoplastische Stärke ist allgemein bekannt und beispielsweise in den Druckschriften EP 0 397 819 B1, WO 91/16375 A1, EP 0 537 657 B1 und EP 0 702 698 B1 ausführlich beschrieben. Thermoplastische Stärke wird im Allgemeinen aus nativer Stärke wie zum Beispiel Kartoffelstärke hergestellt. Um native Stärke thermoplastisch verarbeitbar zu machen, werden ihr Plastifizierungsmittel (Weichmacher) wie Sorbitol und/oder Glycerin hinzugefügt. Thermoplastische Stärke zeichnet sich durch einen geringen Wassergehalt aus, der vorzugweise weniger als 6 Gew %, bezogen auf das Gesamtgewicht der thermoplastischen Stärke, beträgt. Ferner zeichnet sich thermoplastische Stärke durch ihre vorzugsweise im Wesentlichen amorphe Struktur aus.

Vorzugsweise wird thermoplastische Stärke eingesetzt, die einen Wassergehalt von weniger 6 Gew.%, vorzugsweise weniger als 4 Gew.%, insbesondere weniger als 3 Gew.%, bezogen auf das Gesamtgewicht der thermoplastischen Stärke, aufweist.

Es wurde festgestellt, dass bei Verwendung von thermoplastisch verarbeitbarer Stärke mit den angegebenen Wassergehalten (< 6 Gew.%) ein verbessertes Fließverhalten im Extruder sowie eine verringerte Mikrobläschenbildung in der Schicht erzielt werden kann.

Thermoplastische Stärke ist beispielsweise erhältlich durch: (a) Mischen von Stärke und/oder einem Stärkederivat mit mindestens 15 Gew.% eines Weichmachers wie zum Beispiel Glycerin und/oder Sorbitol, (b) Zuführen von thermischer und/oder mechanischer Energie und (c) wenigstens teilweises Entfernen des natürlichen Wassergehalts der Stärke oder des Stärkederivats auf einen Wassergehalt von weniger 6 Gew.%.

Vorteilhafterweise kann mindestens eine der Deckschichten B und/oder C der erfindungsgemäßen Polymerfolie 10 bis 50 Gew.%, bevorzugt 15 bis 50 Gew.%, vorzugsweise 20 bis 50 Gew.%, noch bevorzugt 20 bis 45 Gew.%, noch bevorzugter 25 bis 45 Gew.%, am bevorzugtesten 25 bis 40 Gew.%, bezogen auf das Gesamtgewicht der jeweiligen Deckschicht, destrukturierte Stärke enthalten. Wenn hier von "Stärke" die Rede ist, so sind damit auch Mischungen verschiedener Stärken mit umfasst.

In einer bevorzugten Ausführungsform kann die Mittelschicht A der erfindungsgemäßen Polymerfolie 20 bis 100 Gew.%, bevorzugt 30 bis 100 Gew.%, vorzugsweise 40 bis 100 Gew.%, noch bevorzugt 50 bis 95 Gew.%, noch bevorzugter 60 bis 90 Gew.%, am bevorzugtesten 65 bis 80 Gew.%, bezogen auf das Gesamtgewicht der Mittelschicht A, destrukturierte Stärke enthalten. Wenn hier von "Stärke" die Rede ist, so sind damit auch Mischungen verschiedener Stärken mit umfasst.

Die erfindungsgemäße Polymerfolie enthält in mindestens einer der beiden Deckschichten B und/oder C Polyvinylalkohol. Gemäß einer bevorzugten Ausführungsform der Erfindung kann die erfindungsmäßige Polymerfolie auch in der Mittelschicht A Polyvinylalkohol enthalten. Polyvinylalkohol im Sinne der Erfindung enthält wenigstens zwei Wiederholungseinheiten Vinylalkohol und kann ein Homopolymer oder ein Copolymer mit einem oder mehreren anderen Monomeren sein. Homopolymerer Polyvinylalkohol kann durch vollständige (100%) Hydrolyse von Polyvinylestern wie Polyvinylformat, Polyvinylacetat oder Polyvinylpropionat erhalten werden. Der Grad der Hydrolyse kann auch kleiner als 100% gewählt werden. Beispielsweise kann der Grad der Hydrolyse von 60% bis 99% oder von 70% bis 90% betragen. Auf diese Weise kann die Löslichkeit des Polyvinylalkohols in wässrigen Lösungen eingestellt werden.

Gemäß einer Ausführungsform der Erfindung enthält die Mittelschicht A, bezogen auf deren Gesamtgewicht, 40 bis 100 Gew.%, insbesondere 80 bis 100 Gew.%, Polyvinylalkohol, insbesondere thermoplastischen Polyvinylalkohol. Gemäß einer weiteren Ausführungsform der Erfindung besteht die Mittelschicht A im Wesentlichen aus Polyvinylalkohol, insbesondere thermoplastischem Polyvinylalkohol.

Vorteilhafterweise ist der Polyvinylalkohol ein thermoplastischer Polyvinylalkohol. Ein besonders geeigneter thermoplastischer Polyvinylalkohol wird beispielsweise von der Firma Kuraray unter dem Handelsnamen Mowiflex TC 232 vertrieben.

Die erfindungsgemäße Polymerfolie kann in einer bevorzugten Ausführungsform ferner Weichmacher enthalten. Beispiele für Weichmacher sind Glycerin, Sorbitol, Arabinose, Lycose, Xylose, Glykose, Fructose, Mannose, Allose, Altrose, Galactose, Gulose, lodose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-, 1,5-Hexandiol, 1,2,6-, 1,3,5-Hexantriol, Neopentylglykol, Trimethilolpropan, Pentaerithritol, Sorbit und deren Acetat-, Ethoxylat- und Propoxylat-derivate. Die Weichmacher können bevorzugt in der erfindungsgemäßen Polymerfolie in einer der beiden oder beiden Deckschichten B und C und/oder in der Mittelschicht A enthalten sein. Weichmacher können beispielsweise als Bestandteil von thermoplastischer Stärke oder als Bestandteil von thermoplastischem Polyvinylalkohol enthalten sein.

Die Mittelschicht A der erfindungsgemäßen Polymerfolie kann vorteilhafterweise als weiteren Bestandteil ferner ein anhydridgruppenhaltiges und/oder epoxidgruppenhaltiges Polymer, wobei es sich vorzugsweise um ein epoxidgruppenhaltiges Copolymer handelt, enthalten. Als epoxidgruppenhaltige Polymere bzw. Copolymere kommen insbesondere solche in Frage, die ein zahlenmittleres Molekulargewicht MW von 1.000 bis 25.000 g/mol, insbesondere 3.000 bis 10.000 g/mol, aufweisen.

Vorzugsweise handelt es sich bei dem epoxidgruppen-haltigen Polymer um ein glycidyl(meth)acrylathaltiges Polymer. Ein geeignetes glycidyl(meth)acrylathaltiges Polymer ist beispielsweise ein Copolymer aus (a) Styrol und/oder Ethylen und/oder Methylmethacrylat und/oder Methylacrylat und (b) Glycidyl(meth)acrylat. Besonders gut geeignet als glycidyl(meth)acrylathaltiges Polymer ist ein Copolymer, das ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat. Darin ist Glycidyl(meth)acrylat bevorzugt in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthalten.

Als epoxidgruppenhaltige Polymere kommen ferner epoxidgruppenhaltige Copolymere auf Basis von Styrol, Ethylen, Acrylsäureester und/oder Methacrylsäureester in Frage.

Die Mittelschicht A der erfindungsgemäßen Polymerfolie kann vorzugsweise 0,01 bis 5 Gew.%, insbesondere 0,05 bis 3 Gew.%, noch bevorzugter 0,1 bis 2 Gew.% epoxidgruppenhaltiges Polymer, bezogen auf das Gesamtgewicht der Mittelschicht A, enthalten.

Vorteilhafterweise können die Deckschichten B und/oder C und/oder die Mittelschicht A unabhängig voneinander zusätzlich weitere Bestandteile enthalten. Beispiele für derartige weitere Bestandteile sind Dispergierhilfen wie z.B. Detergentien, Schmelzstabilisatoren, Verarbeitungshilfsmittel, Stabilisatoren, Antioxidationsmittel, Antiflammmittel, Antiblockmittel und/oder Füllstoffe. Vorzugsweise können die Deckschichten B und/oder C und/oder die MittelschichtA unabhängig voneinander zusätzlich weitere Polymere wie zum Beispiel Polyethylenglykol, Polyvinylalkohol, Chitin, Chitosan, Cellulose, Cellulosederivate, Polyester, Polydimethylaminoethylmethacrylat und Mischungen davon enthalten. Dabei kommen insbesondere solche Polymere in Frage, die ein zahlenmittleres Molekulargewicht von 1.000 bis 80.000 g/mol, bevorzugt von 2.000 bis 50.000 g/mol, noch bevorzugt von 3.000 bis 30.000 g/mol aufweisen. Die Deckschichten B und/oder C und/oder die MittelschichtA können vorzugsweise 0,1 Gew.% bis 10 Gew.%, insbesondere 0,05 Gew.% bis 5 Gew.%, noch bevorzugter 0,1 Gew.% bis 3 Gew.% dieser Polymere, bezogen auf das Gesamtgewicht der jeweiligen Deckschicht und/oder der Mittelschicht, enthalten.

Die erfindungsgemäße Polymerfolie zeichnet sich durch gute mechanische Eigenschaften aus, die ihren Einsatz in Tragetaschen ermöglichen.

So weist die erfindungsgemäße Polymerfolie vorteilhafterweise im trockenen Zustand eine Reißdehnung in Extrusionsrichtung (MD, machine direction, Maschinenlaufrichtung) gemäß EN ISO 527 von 100% oder mehr, bevorzugt von 150% oder mehr, weiter bevorzugt 180% oder mehr, noch weiter bevorzugt 200% oder mehr, noch weiter bevorzugt 220% oder mehr, noch weiter bevorzugt 250% oder mehr, auf.

Weiterhin weist die erfindungsgemäße Polymerfolie vorzugsweise im trockenen Zustand eine Reißdehnung quer zur Extrusionsrichtung (TD) gemäß EN ISO 527 von 100 % oder mehr, bevorzugt von 150% oder mehr, weiter bevorzugt 180% oder mehr, noch weiter bevorzugt 200% oder mehr, noch weiter bevorzugt 220% oder mehr, noch weiter bevorzugt 250%, oder mehr, auf.

Zusätzlich zu den zuvor erwähnten Merkmalen kann die erfindungsgemäße Polymerfolie im trockenen Zustand vorteilhafterweise auch einen spezifischen Dart-Drop Wert gemäß ASTM D1709 von mindestens 5 g/µm aufweisen.

In einer bevorzugten Ausführungsform weist die erfindungsgemäße Polymerfolie eine Zugfestigkeit in Extrusionsrichtung (MD) von mindestens 10 MPa, bevorzugt mindestens 15 MPa, weiter bevorzugt mindestens 20 MPa, gemäß EN ISO 527 auf.

Vorteilhafterweise weist die erfindungsgemäße Polymerfolie eine Zugfestigkeit quer zur Extrusionsrichtung (TD) von mindestens 10 MPa, bevorzugt mindestens 15 MPa, weiter bevorzugt mindestens 20 MPa, gemäß EN ISO 527 auf.

Die erfindungsgemäße Polymerfolie zeichnet sich durch ihren Zerfall sowie ihre biologische Abbaubarkeit in wässriger Lösung aus. Gemäß einer bevorzugten Ausführungsform der erfindungsgemäßen Polymerfolie zerfallen die Deckschichten B und/oder C unabhängig voneinander in wässriger Lösung innerhalb von höchstens 14 Tagen, insbesondere innerhalb von höchstens 10 Tagen oder höchstens 7 Tagen, in Teile mit einer Oberfläche von jeweils höchstens 60% der Gesamtoberfläche der ursprünglichen Polymerfolie. Mit einer solchen Folie sind besonders gute Ergebnisse erzielt worden.

Gemäß einer weiteren Ausführungsform der erfindungsgemäßen Polymerfolie zerfallen die Deckschichten B und/oder C unabhängig voneinander in wässriger Lösung innerhalb von höchstens 14 Tagen, insbesondere innerhalb von höchstens 10 Tagen oder höchstens 7 Tagen, in Teile mit einer Oberfläche von jeweils höchstens 100 cm².

Vorteilhafterweise zerfallen die Deckschichten B und/oder C der erfindungsgemäßen Polymerfolie innerhalb von höchstens 14 Tagen, insbesondere innerhalb von höchstens 10 Tagen oder höchstens 7 Tagen, in Teile, die so klein sind, dass sich Tiere nicht mehr damit strangulieren können.

Gemäß einer bevorzugten Ausführungsform der erfindungsgemäßen Polymerfolie weist die Polymerfolie eine Gesamtdicke von 10 µm bis 80 µm, bevorzugt von 20 µm bis 60 µm, weiter bevorzugt von 20 µm bis 40 µm, noch weiter bevorzugt 20 µm bis 35 µm, noch weiter bevorzugt von 25 bis 35 µm, am bevorzugtesten von 30 µm, auf.

Vorzugsweise macht die Mittelschicht A der erfindungsgemäßen Polymerfolie 30% bis 90%, bevorzugt 40% bis 85%, weiter bevorzugt 40% bis 80% und insbesondere 60% bis 80% der Gesamtdicke der Polymerfolie aus.

Vorteilhafterweise machen die Deckschichten B und C der erfindungsgemäßen Polymerfolie zusammen 10% bis 70%, bevorzugt 15% bis 60%, weiter bevorzugt 20% bis 60% und insbesondere 20% bis 40% der Gesamtdicke der Polymerfolie aus. Dabei können die Deckschichten B und C vorteilhafterweise im Wesentlichen dieselbe Dicke oder eine unterschiedliche Dicke aufweisen.

Die erfindungsgemäße Lehre kann nach einer weiteren Ausführungsform der Erfindung auch dadurch verwirklicht werden, dass die Deckschichten B und/oder C der erfindungsgemäßen Polymerfolie unabhängig voneinander Stellen mit einer geringeren Widerstandfähigkeit gegen mechanische Einwirkungen und/oder gegen wässrige Lösungen aufweisen. Auf diese Art und Weise kann der Zerfall der Polymerfolie beschleunigt werden.

Gemäß einer bevorzugten Ausführungsform der Erfindung enthalten die Deckschichten B und/oder C der erfindungsgemäßen Polymerfolie unabhängig voneinander ein wasserlösliches Polymer. Abhängig von der Art des wasserlöslichen Polymers und der Menge an wasserlöslichem Polymer kann die Zerfallsgeschwindigkeit der erfindungsgemäßen Polymerfolie beeinflusst werden. Bevorzugte wasserlösliche Polymere für diesen Zweck sind ausgewählt aus der Gruppe bestehend aus Stärke, thermoplastische Stärke, modifizierte Stärke, Polyvinylalkohol, thermoplastischer Polyvinylalkohol. Die wasserlöslichen Polymere können unabhängig voneinander in den Deckschichten B und/oder C in einer Menge von 0,1 Gew.% bis 40 Gew.%, bevorzugt von 0,1 Gew.% bis 30 Gew.%, weiter bevorzugt von 0,1 Gew.% bis 25 Gew.%, weiter bevorzugt von 0,5 Gew.% bis 20 Gew.%, insbesondere von 1 Gew.% bis 15 Gew.%, weiter bevorzugt von 1 Gew.% bis 10 Gew.%, jeweils bezogen auf das Gesamtgewicht der jeweiligen Deckschicht, enthalten sein.

Gemäß einer weiteren bevorzugten Ausführungsform der Erfindung enthalten die Deckschichten B und/oder C der erfindungsgemäßen Polymerfolie unabhängig voneinander ein oder mehrere Füllstoffe und/oder ein oder mehrere Zerfallsmittel. Abhängig von Art und Menge an Füllstoff und/oder Zerfallsmittel kann die Zerfallsgeschwindigkeit der erfindungsgemäßen Polymerfolie beeinflusst werden. Bevorzugte Füllstoffe für diesen Zweck sind ausgewählt aus der Gruppe bestehend aus Calciumcarbonat, Talkum, Kaolin, Dolomit, Glimmer, Kieselsäure und Mischungen davon. Zerfallsmittel sind dem Fachmann bekannt. Bevorzugte Zerfallsmittel für diesen Zweck sind ausgewählt aus der Gruppe bestehend aus Natriumhydrogencarbonat, Alginsäure, Calciumalginat, Natriumalginat, mikrokristalline Cellulose, Natriumcarboxymethylcellulose, Stärke, Natriumcarboxymethylstärke, Polyvinylpyrrolidon und Mischungen davon. Stärke kann nativ oder destrukturiert vorliegen. Die Füllstoffe können unabhängig voneinander in den Deckschichten B und/oder C in einer Menge von 0,1 Gew.% bis 30 Gew.%, bevorzugt von 0,1 Gew.% bis 25 Gew.%, weiter bevorzugt von 0,5 Gew.% bis 20 Gew.%, insbesondere von 1 Gew.% bis 15 Gew.%, weiter bevorzugt von 1 Gew.% bis 10 Gew.%, jeweils bezogen auf das Gesamtgewicht der jeweiligen Deckschicht, enthalten sein. Die Zerfallsmittel können unabhängig voneinander in den Deckschichten B und/oder C in einer Menge von 0,1 Gew.% bis 30 Gew.%, bevorzugt von 0,1 Gew.% bis 25 Gew.%, weiter bevorzugt von 0,5 Gew.% bis 20 Gew.%, insbesondere von 1 Gew.% bis 15 Gew.%, weiter bevorzugt von 1 Gew.% bis 10 Gew.%, jeweils bezogen auf das Gesamtgewicht der jeweiligen Deckschicht, enthalten sein.

Vorteilhafterweise weisen die Oberflächen der Deckschichten B und/oder C der erfindungsgemäßen Polymerfolie unabhängig voneinander eine geriffelte Oberfläche auf. Auf diese Art und Weise wird der Zerfall zumindest einer der Deckschichten in wässriger Lösung begünstigt.

Gemäß einer weiteren Ausführungsform können die Deckschichten B und/oder C, insbesondere wenn sie einen Füllstoff und/oder ein Zerfallsmittel enthalten, gestreckt werden. Durch das Strecken können Mikroporen entstehen. Diese Mikroporen können die Deckschichten B und/oder C zum einen atmungsaktiv machen. Zum anderen können die Mikroporen den Zerfall in wässriger Lösung begünstigen. Gemäß einer weiteren Ausführungsform kann auch die Mehrschichtfolie zum Erzeugen der Mikroporen gestreckt werden.

Die mechanischen Eigenschaften der erfindungsgemäßen Polymerfolie hängen in entscheidender Weise von den mechanischen Eigenschaften der jeweiligen Einzelschichten (Mittelschicht A, Deckschichten B, C) ab. Für eine Eignung beispielsweise als Tragetasche im täglichen Gebrauch sind Mindestvoraussetzungen für die Einzelschichten erforderlich.

In einer bevorzugten Ausführungsform weisen die Deckschichten B und/oder C der erfindungsgemäßen Polymerfolie im trockenen Zustand jeweils einen spezifischen Dart-Drop Wert von mindestens 5 g/µm gemäß ASTM D1709 auf.

Die erfindungsgemäße Lehre kann nach einer weiteren Ausführungsform der Erfindung auch dadurch verwirklicht werden, dass die Deckschichten B und/oder C der erfindungsgemäßen Polymerfolie unabhängig voneinander eine Zugfestigkeit in Extrusionsrichtung (MD) von mindestens 10 MPa, bevorzugt mindestens 150 MPa, weiter bevorzugt mindestens 20 MPa, gemäß EN ISO 527 aufweisen.

In einer bevorzugten Ausführungsform der Erfindung weisen die Deckschichten B und/oder C der erfindungsgemäßen Polymerfolie unabhängig voneinander eine Zugfestigkeit quer zur Extrusionsrichtung (TD) von mindestens 10 MPa, bevorzugt mindestens 150 MPa, weiter bevorzugt mindestens 20 MPa, gemäß EN ISO 527 auf.

Vorteilhafterweise weisen die Deckschichten B und/oder C der erfindungsgemäßen Polymerfolie unabhängig voneinander eine Reißdehnung in Extrusionsrichtung (MD) von mindestens 100%, bevorzugt mindestens 150%, weiter bevorzugt 180%, noch weiter bevorzugt mindestens 200%, gemäß EN ISO 527 auf.

Vorzugsweise weisen die Deckschichten B und/oder C der erfindungsgemäßen Polymerfolie unabhängig voneinander eine Reißdehnung quer zur Extrusionsrichtung (TD) von mindestens 100%, bevorzugt mindestens 150%, weiter bevorzugt mindestens 180%, noch weiter bevorzugt mindestens 200%, gemäß EN ISO 527 auf.

In einer weiteren Ausführungsform der Erfindung weist die Mittelschicht A der erfindungsgemäßen Polymerfolie eine Zugfestigkeit in Extrusionsrichtung (MD) von mindestens 10 MPa, bevorzugt mindestens 15 MPa, gemäß EN ISO 527 auf.

Vorteilhafterweise weist die Mittelschicht A der erfindungsgemäßen Polymerfolie eine Zugfestigkeit quer zur Extrusionsrichtung (MD) von mindestens 10 MPa, bevorzugt mindestens 15 MPa, gemäß EN ISO 527 auf.

Vorzugsweise weist die Mittelschicht A der erfindungsgemäßen Polymerfolie eine Reißdehnung in Extrusionsrichtung (MD) von mindestens 100%, bevorzugt mindestens 150%, weiter bevorzugt mindestens 200%, gemäß EN ISO 527 auf.

Gemäß einer bevorzugten Ausführungsform der Erfindung weist die Mittelschicht A der erfindungsgemäßen Polymerfolie eine Reißdehnung quer zur Extrusionsrichtung (TD) von mindestens 100%, bevorzugt mindestens 150%, weiter bevorzugt mindestens 200%, gemäß EN ISO 527 auf.

In einer bevorzugten Ausführungsform der Erfindung sind die Deckschichten B und C der erfindungsgemäßen Polymerfolie identisch. Dies erlaubt eine besonders einfache Herstellung der erfindungsgemäßen Polymerfolie.

Die erfindungsgemäße Lehre kann auch durch eine mehrschichtige Polymerfolie umfassend mindestens eine Mittelschicht A, deren polymere Bestandteile in wässriger Lösung löslich sind, und jeweils mindestens eine, oberhalb und unterhalb der mindestens einen Mittelschicht A angeordnete, im wesentlichen wasserundurchlässige Deckschicht B, C, wobei die Schichten A, B und C unabhängig voneinander jeweils mindestens ein thermoplastisches Polymer enthalten und wobei die Schicht A eine Zugfestigkeit gemäß EN ISO 527 von mindestens 15 MPa aufweist und die Schichten B und C jeweils eine Zugfestigkeit gemäß EN ISO 527 von mindestens 20 MPa aufweisen, erfüllt werden.

In einer weiteren Ausführungsform der Erfindung sind zusätzlich zu der Mittelschicht A sowie den Deckschichten B und C eine oder mehrere weitere Schichten in der erfindungsgemäßen Polymerfolie enthalten. Derartige Schichten sind bevorzugt zwischen der Mittelschicht und einer Deckschicht angeordnet. Beispielsweise kommen als weitere Schichten Klebeschichten, Haftvermittler oder Schichten, die die mechanischen Eigenschaften zusätzlich verbessern, in Frage. Als Beispiel für eine Mehrschichtfolie enthaltend Haftvermittler kann folgender Schichtaufbau angegeben werden: Schicht B - Haftvermittler - Schicht A - Haftvermittler - Schicht C.

Die Mehrschichtfolie kann insbesondere noch weitere Deckschichten B und/oder C umfassen. Möglich ist beispielsweise auch eine Mehrschichtfolie mit folgendem Schichtaufbau: Schicht B - Schicht B - Schicht A - Schicht C - Schicht C. Zwischen den einzelnen Schichten kann darüber hinaus ein Haftvermittler angeordnet sein.

Vorteilhafterweise sind die Deckschichten B, C sowie weitere eventuell vorhandene Deckschichten durch Extrusion hergestellt. Insbesondere sind die Deckschichten B, C sowie weitere eventuell vorhandene Deckschichten vorzugsweise nicht durch Auftragen einer Lösung enthaltend die Zusammensetzung der jeweiligen Deckschichten auf ein Substrat hergestellt.

Hierin beschrieben werden ferner Verfahren, mit denen es möglich ist, eine mehrschichtige Polymerfolie mindestens umfassend eine Mittelschicht A, deren polymere Bestandteile sich in wässriger Lösung auflösen, und jeweils mindestens eine oberhalb und unterhalb der Mittelschicht angeordnete, im wesentlichen wasserundurchlässige Deckschicht B, C, wobei die Schichten A, B und C unabhängig voneinander jeweils mindestens ein thermoplastisches Polymer enthalten und mindestens eine der Deckschichten B und C mindestens ein Polyhydroxyalkanoat enthält, zu erhalten.

Grundsätzlich umfassen diese Verfahren die folgenden Schritte, wobei die einzelnen Schritte gleichzeitig oder nacheinander und in beliebiger Reihenfolge und Häufigkeit durchgeführt werden können:
a. Bereitstellen einer Polymerzusammensetzung der ersten Deckschicht, die mindestens ein Polyhydroxyalkanoat enthält,
b. Formen der ersten Deckschicht,
c. Bereitstellen mindestens eines thermoplastischen Polymers der Mittelschicht,
d. Formen einer Mittelschicht,
e. Bereitstellen einer Polymerzusammensetzung der zweiten Deckschicht,
f. Formen der zweiten Deckschicht.

Bevorzugt werden die Verfahrensschritte in der oben angegebenen Reihenfolge durchgeführt.

Unter Polymerzusammensetzung im Sinne der Erfindung wird jedes Material verstanden, das mindestens ein Polymer umfasst, insbesondere können ein, zwei oder mehrere Polymere darin umfasst sein.

Das Verfahren kann das zumindest teilweise flächige Verbinden der einzelnen Schichten beinhalten

Die Schritte b., d. und f. des Verfahrens werden bevorzugt gleichzeitig durchgeführt.

Aus ökonomischen und verfahrenstechnischen Gründen hat es sich als vorteilhaft erwiesen, wenn das Verfahren einen Coextrusionschritt umfasst. Dies erlaubt eine schnelle und kostengünstige Verfahrensweise.

Das Verfahren kann ferner einen Kaschierungsschritt umfassen. Dies erlaubt eine höhere Flexibilität und es können so sehr einfach zusätzliche Schichten in die Polymerfolie eingebaut werden.

In dem Verfahren kann der Polymerzusammensetzung in Schritt e. mindestens ein Polyhydroxyalkanoat zugesetzt werden.

Das Verfahren kann ferner einen Schritt umfassen, in dem die Deckschichten B und/oder C und/oder die hergestellte Mehrschichtfolie gestreckt wird. Dadurch können Mikroporen in den Schichten, insbesondere in den Deckschichten B und/oder C erzeugt werden. Das Verfahren kann ferner einen Schritt umfassen, in dem die Mehrschichtfolie gestreckt wird.

Die erfindungsgemäßen mehrschichtigen Polymerfolien eignen sich für die verschiedensten Zwecke. Insbesondere eignen sich die Polymerfolien zur Herstellung von Formteilen, Folien oder Tüten. Aufgrund des Zerfalls und der biologischen Abbaubarkeit in wässrigen Lösungen eignen sich die erfindungsgemäßen Polymerfolien besonders gut zur Herstellung von Tüten, insbesondere von Kunststoff-Tragetaschen.

Gegenstand der Erfindung sind schließlich auch Erzeugnisse, die mit den erfindungsgemäßen mehrschichtigen Polymerfolien hergestellt oder herstellbar sind. In Betracht kommen insbesondere Formteile, Folien oder Tüten, beispielsweise Abfallsäcke, Tragetaschen, Einweggeschirr (z.B. Becher, Tassen, Teller und Besteck), Verpackungsfolien, Flaschen, Obst- und Gemüseschalen (so genannte Trays), Verpackungshilfsmittel (Loose-fill-Chips), Mulchfolien und Blumentöpfe.

Das Prinzip der Erfindung soll im Folgenden an Beispielen näher erläutert werden.

Für die Vergleichs- und Ausführungsbeispiele wurden folgende Materialien verwendet: Polymilchsäure, PLA (INGEO 2003D, NATUREWORKS); Poly(butylenadipat-co-terephthalat), PBAT (ECOFLEX F Blend C 1201, BASF); Poly(butylensebacat-co-terephthalat), PBST (ECOFLEX FS Blend A 1100, BASF); Poly(butylensuccinat-co-adipat), PBSA (GS Pla AD 92 WN, Mitsubishi); Polycaprolacton, PCL (Capa 6800, Perstorp); Thermoplastische Stärke, TPS (BIOPLAST TPS, Biotec); Poly(hydroxybutyrat-co-hexanoat), PHBH (AONILEX X 151 A, KANEKA); native Kartoffelstärke (EMSLANDSTÄRKE SUPERIOR); Polyvinylalkohol, PVOH (Mowiflex TC 232 Kuraray); Glycerin (OLEON); Sorbitol (CARGILL).

### Beispiel 1 (Vergleichsbeispiel):

Mit einem Zweiwellenextruder (Gleichläufer) des Typs *Werner & Pfleiderer (COPERION)* ZSK 70, Schneckendurchmesser 70 mm, L/D = 36, wurde folgendes Polymerblend A compoundiert (dosierte Anteile in Massenprozent):

**Tab. 1: Rezeptur A**

| | **A** |
|---|---|
| PBAT | 57,4 |
| Stärke | 42,6 |

Dabei wurden folgende Compoundierparameter eingehalten:

**Tab.2: Temperaturprofil ZSK 70**

| Zone 1 | Zone 2 | Zone 3 | Zone 4 | Zone 5 | Zone 6 | Zone 7 | Zone 8 | Zone 9 | Zone 10 | Zone 11 | Düse |
|---|---|---|---|---|---|---|---|---|---|---|---|
| 25 °C | 190 °C | 190 °C | 190 °C | 170 °C | 170 °C | 170 °C | 170 °C | 155 °C | 100 °C | 150 °C | 140 °C |

| | |
|---|---|
| Schmelzetemperatur bei Düsenaustritt: | 163 °C |
| Drehzahl: | 205 min⁻¹ |
| Durchsatz: | 400 kg/h |
| Entgasung: | aktiv (Vakuum, Zone 9) |
| Wassergehalt: | kleiner 1 Gew.% (gemessen nach dem Austritt aus dem Extruder) |

Weiterhin wurde mit einem Einwellenextruder des Typs *COLLIN 30 (DR. COLLIN),* Schneckendurchmesser 30 mm, L/D = 33, thermoplastische Stärke (TPS) mit folgender Rezeptur compoundiert (dosierte Anteile in Massenprozent):

**Tab. 3: Rezeptur TPS**

| | **TPS** |
|---|---|
| Glycerin | 20 |
| Sorbitol | 10 |
| Stärke | 70 |

Granulat A wurde anschließend mit einem Einwellenextruder des Typs *COLLIN 30* (*DR. COLLIN*), Schneckendurchmesser 30 mm, L/D = 33, aufgeschmolzen und zusammen mit der thermoplastischen Stärke TPS, welche ebenfalls in einem Einwellenextruder des Typs *COLLIN 30* (*DR. COLLIN*), Schneckendurchmesser 30 mm, L/D = 33, aufgeschmolzen wurde, in einem Coextrusionsschritt zu einer dreischichtigen Folie verarbeitet, wobei die Mittelschicht aus TPS und die Deckschichten aus Zusammensetzung A bestand. Die mechanischen Eigenschaften der dreischichtigen Folie sowie die Zersetzbarkeit der Deckschichten in kleinere Teile und die Löslichkeit der Mittelschicht in Wasser wurden untersucht.

Für die Untersuchung der Haltbarkeit der dreischichtigen Folie in Wasser wurden Proben der Folie in Diarahmen eingespannt und in natürlichem Meerwasser eingelegt. Die Folie wurde zudem mechanisch beansprucht. Die Zersetzung der Folie wurde visuell begutachtet.

Die Ergebnisse dieser Untersuchung sind in der nachfolgenden Tabelle zusammengefasst.

**Tab.4: Mechanische Eigenschaften der dreischichtigen Folie und Zersetzbarkeit/Löslichkeit in Wasser**

| Dicke Deckschichten (jeweils) [µm] | Dicke Mittelschicht [µm] | Spezifischer Dart Drop [g/µm] ASTM D 1709 | Zugfestigkeit [MPa] | | Reißdehnung [%] | | Zersetzbarkeit Deckschichten | Löslichkeit Mittelschicht |
|---|---|---|---|---|---|---|---|---|
| | | | EN ISO 527 | | | | | |
| | | | | | EN ISO 527 | | | |
| | | | MD | TD | MD | TD | | |
| 10 | 10 | 8 | 10,7 | 7,6 | 475 | 230 | Keine Zersetzung nach 14 Tagen | Mittelschicht wegen intakter Deckschichten nach 14 Tagen intakt |

Wie der Tabelle zu entnehmen ist, weist die resultierende Folie zum einen eine Zugfestigkeit auf, die für die Anforderungen an eine Tüte unzureichend sind. Weiterhin war nach 14 Tagen keine Zersetzung der Deckschichten zu erkennen, weshalb die Folie auch nach 14 Tagen noch intakt war.

### Beispiel 2:

Mit einem Zweiwellenextruder (Gleichläufer) des Typs *Werner & Pfleiderer* (*COPERION*) ZSK 40, Schneckendurchmesser 40 mm, L/D = 42, wurde folgende Rezeptur B compoundiert (dosierte Anteile in Massenprozent):

**Tab. 5: Rezeptur**

| | **B** |
|---|---|
| PBAT | 44,6 |
| PHBH | 19,8 |
| Stärke | 20,5 |
| PVOH | 10 |
| PLA | 5,1 |

Dabei wurden folgende Compoundierparameter eingehalten:

**Tab.6: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25 °C | 150 °C | 150 °C | 140 °C | 130 °C | 130 °C | 130 °C | 130 °C | 130 °C |

| | |
|---|---|
| Schmelzetemperatur bei Düsenaustritt: | 133 °C |
| Drehzahl: | 140 min⁻¹ |
| Durchsatz: | 40 kg/h |
| Entgasung: | aktiv (Vakuum, Zone 7) |
| Wassergehalt: | kleiner 1 Gew.% (gemessen nach dem Austritt aus dem Extruder) |

Granulat B wurde anschließend mit einem Einwellenextruder des Typs *COLLIN 30* (*DR. COLLIN*), Schneckendurchmesser 30 mm, L/D = 33, aufgeschmolzen und zusammen mit PVOH, welches ebenfalls in einem Einwellenextruder des Typs *COLLIN 30 (DR. COLLIN),* Schneckendurchmesser 30 mm, L/D = 33, aufgeschmolzen wurde, in einem Coextrusionsschritt zu einer dreischichtigen Folie verarbeitet, wobei die Mittelschicht aus PVOH und die Deckschichten aus Zusammensetzung B bestand. Die mechanischen Eigenschaften der dreischichtigen Folie sowie die Zersetzbarkeit der Deckschichten in kleinere Teile und die Löslichkeit der Mittelschicht in Wasser wurden untersucht.

Für die Untersuchung der Haltbarkeit der dreischichtigen Folie in Wasser wurden Proben der Folie in Diarahmen eingespannt und in natürliches Meerwasser eingelegt. Zudem wurde die Folie mechanisch beansprucht. Die Zersetzung der Folie wurde visuell begutachtet.

Die Ergebnisse dieser Untersuchung sind in der nachfolgenden Tabelle zusammengefasst.

**Tab.7: Mechanische Eigenschaften der dreischichtigen Folie und Zersetzbarkeit/Löslichkeit in Wasser**

| Dicke Deckschichten (jeweils) [µm] | Dicke Mittelschicht [µm] | Spezifischer Dart Drop [g/µm] ASTM D 1709 | Zugfestigkeit [MPa] | | Reißdehnung [%] | | Zersetzbarkeit Deckschichten | Löslichkeit Mittelschicht |
|---|---|---|---|---|---|---|---|---|
| | | | EN ISO 527 | | | | | |
| | | | | | EN ISO 527 | | | |
| | | | MD | TD | MD | TD | | |
| 10 | 10 | 25,4 | 37,0 | 40,3 | 281 | 234 | Kleinere Teile nach 7 Tagen | Vollständige Auflösung nach 7 Tagen |

Die Tabelle zeigt für diese Folie deutlich gesteigerte Werte für die Zugfestigkeit sowie gute Werte für die Reißdehnung, die sie zum Beispiel für eine Tüte geeignet machen. Weiterhin wurde beobachtet, dass beide Deckschichten nach wenigen Tagen anfingen, in kleinere Teile zu zerfallen, was die Mittelschicht freilegte, deren polymere Bestandteile sich in wässriger Lösung auflösten.

### Beispiele 3 bis 15 (Vergleichsbeispiele)

Mit einer 5-Schicht Blasfolienanlage des Typs *Biotem 10 15* (*Dr. Collin*), mit Schneckendurchmessern von 20 mm, L/D = 25, für die äußeren vier Schichten und einem Schneckendurchmesser von 25 mm, L/D = 25, für die innere Schicht wurden Mehrschichtfolien hergestellt. Dabei wurden für die Deckschichten die folgenden Rezepturen in den Extrudern compoundiert (dosierte Anteile in Massenprozent):

**Tab. 8: Rezepturen für die Deckschichten**

| | C | D | E | F | G | H | J |
|---|---|---|---|---|---|---|---|
| PHBH | 84 | 72 | 63 | 26 | 30 | 58 | 75 |
| PBAT | 16 | 15 | 21 | 41 | 42 | 26 | 10 |
| PBST | - | 13 | - | - | - | - | - |
| Stärke | - | - | 15 | 30 | 28 | 15 | - |
| PLA | - | - | 1 | 3 | - | 1 | - |
| PCL | - | - | - | - | - | - | 15 |

**Fortsetzung Tab. 8**

| | K | L | M | N | O |
|---|---|---|---|---|---|
| PHBH | 70 | 30 | 70 | 31 | 95 |
| PBAT | 17 | 42 | - | - | - |
| PBSA | 13 | - | - | - | - |
| Stärke | - | 28 | - | - | - |
| PLA | - | - | 30 | 69 | - |
| PCL | - | - | - | - | 5 |

Für Mehrschichtfolien, bei denen für die Deckschichten die Rezeptur L verwendet wurde, wurde TPS (siehe Beispiel 1) für die Mittelschicht verwendet. Für Mehrschichtfolien, bei denen für die Deckschichten die Rezepturen C bis K, M bis O sowie reines PHBH verwendet wurden, wurde PVOH für die Mittelschicht verwendet. Somit ergaben sich folgende Kombinationen für die Mehrschichtfolien:

**Tab. 9: Kombinationen der Rezepturen der Deckschichten mit den verschiedenen Mittelschichten**

| Mehrschichtfolie Nr. | Deckschichten | Mittelschicht |
|---|---|---|
| I | PHBH | PVOH |
| II | Rezeptur C | PVOH |
| III | Rezeptur D | PVOH |
| IV | Rezeptur E | PVOH |
| V | Rezeptur F | PVOH |
| VI | Rezeptur G | PVOH |
| VII | Rezeptur H | PVOH |
| VIII | Rezeptur J | PVOH |
| IX | Rezeptur K | PVOH |
| X | Rezeptur L | TPS |
| XI | Rezeptur M | PVOH |
| XII | Rezeptur N | PVOH |
| XIII | Rezeptur O | PVOH |

Es wurden folgende Verarbeitungsparameter eingehalten:

**Tab. 10: Temperaturprofil Biotem 1015**

| Deckschicht | Extruder | Zone 1 | Zone 2 | Zone 3 | Zone 4 | Flansch 1 | Düse |
|---|---|---|---|---|---|---|---|
| PHBH, Rezepturen C, D, G, J, K, O | Deckschichten | 25°C | 160°C | 165°C | 165°C | 165°C | 170°C |
| | Mittelschicht | 25°C | 185°C | 185°C | 185°C | 185°C | 175°C |
| Rezepturen E, F, H | Deckschichten | 25°C | 180°C | 180°C | 180°C | 180°C | 175°C |
| | Mittelschicht | 25°C | 185°C | 185°C | 185°C | 185°C | 175°C |
| Rezeptur L | Deckschichten | 25°C | 160°C | 165°C | 165°C | 165°C | 170°C |
| | Mittelschicht | 25°C | 165°C | 165°C | 165°C | 165°C | 165°C |
| Rezepturen M, N | Deckschichten | 25°C | 180°C | 185°C | 185°C | 185°C | 185°C |
| | Mittelschicht | 25°C | 185°C | 185°C | 185°C | 185°C | 175°C |

| | |
|---|---|
| Drehzahl: | 55-90 min⁻¹ |
| Ringdüse: | Durchmesser 60 mm |
| Ringspalt: | 1,20 mm |
| Aufblasverhältnis: | ca. 1:3. |

Es wurden Folien mit einer Gesamtdicke von 20 bis 35 µm hergestellt. Die Mehrschichtfolien hatten den Aufbau Deckschicht - Deckschicht - Mittelschicht - Deckschicht - Deckschicht. Die einzelnen Schichten hatten dabei ein Verhältnis Deckschicht:Deckschicht:Mittelschicht:Deckschicht:Deckschicht von 1:1:2-4:1:1.

Die Folien wurden anschließend für mindestens 72 Stunden gelagert, bevor die mechanischen Eigenschaften untersucht wurden.

**Tab. 11: Mechanische Eigenschaften der Mehrschichtfolien**

| Folie | Spezifischer Dart Drop [g/µm] ASTM D 1709 | Zugfestigkeit [MPa] EN ISO 527 | | Reiß-dehnung [%] EN ISO 527 | |
|---|---|---|---|---|---|
| | | MD | TD | MD | TD |
| I | 6 | 35 | 37 | 190 | 410 |
| II | 7 | 27 | 25 | 320 | 450 |
| III | 8 | 23 | 24 | 457 | 530 |
| IV | 8 | 24 | 26 | 418 | 491 |
| V | 11 | 37 | 40 | 281 | 234 |
| VI | 10 | 28 | 30 | 405 | 436 |
| VII | 5 | 37 | 28 | 216 | 228 |
| VIII | 9 | 22 | 24 | 480 | 562 |
| IX | 6 | 32 | 31 | 310 | 378 |
| X | 7 | 11 | 10 | 513 | 444 |
| XI | 5 | 47 | 49 | 209 | 220 |
| XII | 5 | 52 | 55 | 123 | 147 |
| XIII | 7 | 26 | 28 | 280 | 452 |

Die Tabelle zeigt, dass sich die Folien I bis IX und XI bis XIII aufgrund ihrer mechanischen Eigenschaften insbesondere für Plastik-Tragetaschen eignen. Ebenso wurde beobachtet, dass die Folien I bis XIII in Diarahmen eingespannt, in natürlichem Meerwasser eingelegt und mechanisch beansprucht nach mehreren Tagen in Wasser in kleinere Teile zerfielen. Dabei löste sich die Mittelschicht auf und die Deckschichten zerfielen in kleinere Teile.

## Patentansprüche

1. Mehrschichtige Polymerfolie umfassend mindestens eine Mittelschicht A, deren polymere Bestandteile in wässriger Lösung löslich sind, und jeweils mindestens eine, oberhalb und unterhalb der mindestens einen Mittelschicht A angeordnete, im wesentlichen wasserundurchlässige Deckschicht B, C, wobei die Schichten A, B und C unabhängig voneinander jeweils mindestens ein thermoplastisches Polymer enthalten, **dadurch gekennzeichnet, dass** die Schicht A eine Zugfestigkeit gemäß EN ISO 527 von mindestens 15 MPa aufweist und die Schichten B und C jeweils eine Zugfestigkeit gemäß EN ISO 527 von mindestens 20 MPa aufweisen, wobei mindestens eine der Deckschichten B und/oder C Polyvinylalkohol enthält.

2. Polymerfolie gemäß Anspruch 1, **dadurch gekennzeichnet, dass** die Deckschichten B und/oder C unabhängig voneinander ein oder mehrere Zerfallsmittel ausgewählt aus der Gruppe bestehend aus Natriumhydrogencarbonat, Alginsäure, Calciumalginat, Natriumalginat, mikrokristalline Cellulose, Natriumcarboxymethylcellulose, Natriumcarboxymethylstärke, Polyvinylpyrrolidon und Mischungen davon enthalten.

3. Polymerfolie nach Anspruch 1 oder 2, **dadurch gekennzeichnet, dass** mindestens eine der Deckschichten B und C mindestens ein Polyhydroxyalkanoat enthält.

4. Polymerfolie nach einem der vorstehenden Ansprüche, **dadurch gekennzeichnet, dass** das Polyhydroxyalkanoat in mindestens einer der Deckschichten B und C in einer Menge von mindestens 10 Gew.%, insbesondere mindestens 15 Gew.% oder 20 Gew.%, bezogen auf das Gesamtgewicht der jeweiligen Deckschicht, enthalten ist,
und/oder dass das jeweils mindestens eine thermoplastische Polymer der Deckschichten B und C hydrolytisch zersetzbar ist,
und/oder dass das jeweils mindestens eine thermoplastische Polymer der Deckschichten B und C unabhängig voneinander ausgewählt ist aus der Gruppe bestehend aus thermoplastische Stärke, stärkehaltige Thermoplaste,
Polyvinylalkohol, thermoplastischer Polyvinylalkohol, Polyvinylacetat, Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat), Polymilchsäure, Polycaprolacton, Polybutylensuccinat, Poly(butylenadipat-co-succinat), aromatisch-aliphatischer Copolyester, Poly(butylenadipat-co-terephthalat), Poly(butylensebacat-co-terephthalat) und Mischungen davon,
und/oder dass das Polyhydroxyalkanoat in mindestens einer der Deckschichten B und C ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat) und Mischungen davon,
und/oder dass das Polyhydroxyalkanoat in mindestens einer der Deckschichten B und C durch Mikroorganismen in einem Fermentationsprozess und/oder durch chemische Synthese hergestellt wurde,
und/oder dass die Deckschichten B und C jeweils mindestens ein Polyhydroxyalkanoat enthalten,
und/oder dass das mindestens eine thermoplastische Polymer der Deckschichten B und/oder C das Polyhydroxyalkanoat ist,
und/oder dass das mindestens eine thermoplastische Polymer der Mittelschicht A ausgewählt ist aus der Gruppe bestehend aus thermoplastische Stärke, stärkehaltige Thermoplaste, Polyvinylalkohol, thermoplastischer Polyvinylalkohol, Polyvinylacetat, Polyethylenglykol, Celluloseacetat, Ethylcellulose, Hydroxypropylcellulose, Hydroxypropylmethylcellulose, Poly(vinylpyrrolidon), Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hydroxyhexanoat), Polymilchsäure, Polycaprolacton, Polybutylensuccinat, Poly(butylenadipat-co-succinat), aromatisch-aliphatischer Copolyester, Poly(butylenadipat-co-terephthalat), Poly(butylensebacat-co-terephthalat) und Mischungen davon.

5. Polymerfolie gemäß einem der vorstehenden Ansprüche, **dadurch gekennzeichnet, dass** die Deckschichten B und/oder C gemäß ASTM D6866 jeweils mindestens 40%, insbesondere mindestens 45% oder 50% biobasierten Kohlenstoff enthalten, bezogen auf die Gesamtmenge an Kohlenstoff der jeweiligen Deckschichten,
und/oder dass die Deckschichten B und/oder C gemäß ISO 15985 und/oder gemäß ISO 14855 zu jeweils mindestens 40%, insbesondere mindestens 45% oder mindestens 50%, mindestens 60%, mindestens 80%, mindestens 90% oder mindestens 95% biologisch abbaubar sind,
und/oder dass die Mittelschicht A gemäß ISO 15985 und/oder gemäß ISO 14855 zu mindestens 40%, mindestens 50%, mindestens 60%, mindestens 70%, mindestens 80%, mindestens 90% oder mindestens 95% biologisch abbaubar ist.

6. Polymerfolie gemäß einem der vorstehenden Ansprüche, **dadurch gekennzeichnet, dass** die Polymerfolie im trockenen Zustand eine Reißdehnung in Extrusionsrichtung (MD) gemäß EN ISO 527 von 100% oder mehr, insbesondere von 150% oder mehr, 180% oder mehr, 200% oder mehr, 220% oder mehr oder 250% oder mehr, aufweist,
und/oder dass die Polymerfolie im trockenen Zustand eine Reißdehnung quer zur Extrusionsrichtung (TD) gemäß EN ISO 527 von 100 % oder mehr, insbesondere von 150% oder mehr, 180% oder mehr, 200% oder mehr, 220% oder mehr oder 250% oder mehr, aufweist,
und/oder dass die Polymerfolie im trockenen Zustand einen spezifischen Dart-Drop Wert gemäß ASTM D1709 von mindestens 5 g/µm aufweist.

7. Polymerfolie gemäß einem der vorstehenden Ansprüche, **dadurch gekennzeichnet, dass** die Deckschichten B und/oder C unabhängig voneinander in wässriger Lösung innerhalb von höchstens 14 Tagen, insbesondere innerhalb von höchstens 10 Tagen oder höchstens 7 Tagen, in Teile mit einer Oberfläche von jeweils höchstens 60% der Gesamtoberfläche der ursprünglichen Polymerfolie zerfallen,
und/oder dass die Deckschichten B und/oder C unabhängig voneinander in wässriger Lösung innerhalb von höchstens 14 Tagen, insbesondere innerhalb von höchstens 10 Tagen oder höchstens 7 Tagen, in Teile mit einer Oberfläche von jeweils höchstens 100 cm² zerfallen,
und/oder dass die Deckschichten B und/oder C unabhängig voneinander Stellen mit einer geringeren Widerstandfähigkeit gegen mechanische Einwirkungen und/oder gegen wässrige Lösungen aufweisen,
und/oder dass die Deckschichten B und/oder C unabhängig voneinander ein wasserlösliches Polymer enthalten,
und/oder dass die Oberflächen der Deckschichten B und/oder C unabhängig voneinander eine geriffelte Oberfläche aufweisen.

8. Polymerfolie gemäß einem der vorstehenden Ansprüche, **dadurch gekennzeichnet, dass** die Polymerfolie eine Gesamtdicke von 10 µm bis 80 µm, insbesondere von 20 µm bis 60 µm, 20 µm bis 40 µm, 20 µm bis 35 µm oder 25 bis 35 µm, aufweist,
und/oder dass die Mittelschicht A der Polymerfolie 30% bis 90%, insbesondere 40% bis 85%, 40% bis 80% oder 60% bis 80%, der Gesamtdicke der Polymerfolie ausmacht,
und/oder dass die Deckschichten B und C der Polymerfolie zusammen 10% bis 70%, insbesondere 15% bis 60%, 20% bis 60% oder 20% bis 40%, der Gesamtdicke der Polymerfolie ausmachen.

9. Polymerfolie gemäß einem der vorstehenden Ansprüche, **dadurch gekennzeichnet, dass** die Deckschichten B und/oder C im trockenen Zustand jeweils einen spezifischen Dart-Drop Wert von mindestens 5 g/µm gemäß ASTM D1709 aufweisen,
und/oder dass die Deckschichten B und/oder C unabhängig voneinander eine Zugfestigkeit in Extrusionsrichtung (MD) von mindestens 10 MPa, insbesondere mindestens 15 MPa oder mindestens 20 MPa, gemäß EN ISO 527 aufweisen und/oder dass die Deckschichten B und/oder C unabhängig voneinander eine Zugfestigkeit quer zur Extrusionsrichtung (TD) von mindestens 10 MPa, insbesondere mindestens 15 MPa oder mindestens 20 MPa, gemäß EN ISO 527 aufweisen,
und/oder dass die Deckschichten B und/oder C unabhängig voneinander eine Reißdehnung in Extrusionsrichtung (MD) von mindestens 100%, insbesondere mindestens 150%, mindestens 180% oder mindestens 200%, gemäß EN ISO 527 aufweisen,
und/oder dass die Deckschichten B und/oder C unabhängig voneinander eine Reißdehnung quer zur Extrusionsrichtung (TD) von mindestens 100%, insbesondere mindestens 150%, mindestens 180% oder mindestens 200%, gemäß EN ISO 527 aufweisen,
und/oder dass die Deckschichten B und C identisch sind,
und/oder dass die Mittelschicht A eine Zugfestigkeit in Extrusionsrichtung (MD) von mindestens 10 MPa, insbesondere mindestens 15 MPa, gemäß EN ISO 527 aufweist,
und/oder dass die Mittelschicht A eine Zugfestigkeit quer zur Extrusionsrichtung (TD) von mindestens 10 MPa, insbesondere mindestens 15 MPa, gemäß EN ISO 527 aufweist,
und/oder dass die Mittelschicht A eine Reißdehnung in Extrusionsrichtung (MD) von mindestens 100%, insbesondere mindestens 150%, oder mindestens 200%, gemäß EN ISO 527 aufweist,
und/oder dass die Mittelschicht A eine Reißdehnung quer zur Extrusionsrichtung (TD) von mindestens 100%, insbesondere mindestens 150%, oder mindestens 200%, gemäß EN ISO 527 aufweist.

10. Verwendung einer Polymerfolie gemäß einem der Ansprüche 1 bis 9 zur Herstellung von Formteilen, Folien oder Tüten.

11. Formteil, Folie oder Tüte, hergestellt aus einer mehrschichtigen Polymerfolie gemäß einem der Ansprüche 1 bis 9.

## Claims

1. Multilayer polymer film comprising at least one central layer A, the polymeric components of which are soluble in aqueous solution, and in each case at least one substantially watertight cover layer B, C arranged above and below the at least one central layer A, wherein the layers A, B and C, independently of one another, each contain at least one thermoplastic polymer,
**characterized in that** the layer A has a tensile strength according to EN ISO 527 of at least 15 MPa and the layers B and C each have a tensile strength according to EN ISO 527 of at least 20 MPa, wherein at least one of the cover layers B and/or C contains polyvinyl alcohol.

2. Polymer film according to claim 1, **characterized in that** the cover layers B and/or C, independently of one another, contain one or more disintegrants selected from the group consisting of sodium hydrogen carbonate, alginic acid, calcium alginate, sodium alginate, microcrystalline cellulose, sodium carboxymethyl cellulose, sodium carboxymethyl starch, polyvinylpyrrolidone and mixtures thereof.

3. Polymer film according to claim 1 or 2, **characterized in that** at least one of the cover layers B and C contains at least one polyhydroxyalkanoate.

4. Polymer film according to any of the preceding claims, **characterized in that** the polyhydroxyalkanoate is contained in at least one of the cover layers B and C in an amount of at least 10 wt.%, in particular at least 15 wt.% or 20 wt.%, based on the total weight of the corresponding cover layer,
and/or **in that** the in each case at least one thermoplastic polymer of the cover layers B and C is hydrolytically decomposable,
and/or **in that** the in each case at least one thermoplastic polymer of the cover layers B and C, independently of one another, is selected from the group consisting of thermoplastic starch, starch-containing thermoplastics, polyvinyl alcohol, thermoplastic polyvinyl alcohol, polyvinyl acetate, poly(3-hydroxybutanoate), poly(3-hydroxyvalerate), poly(3-hydroxyhexanoate), poly(3-hydroxybutyrate-co-3-hydroxyvalerate), poly(3-hydroxybutyrate-co-3-hydroxyhexanoate), polylactic acid, polycaprolactone, polybutylene succinate, poly(butylene adipate-co-succinate), aromatic-aliphatic copolyester, poly(butylene adipate-co-terephthalate), poly(butylene sebacate co-terephthalate) and mixtures thereof,
and/or **in that** the polyhydroxyalkanoate in at least one of the cover layers B and C is selected from the group consisting of poly(3-hydroxybutanoate), poly(3-hydroxyvalerate), poly(3-hydroxyhexanoate), poly(3-hydroxybutyrateco-3-hydroxyvalerate), poly(3-hydroxybutyrate-co-3-hydroxyhexanoate), and mixtures thereof,
and/or **in that** the polyhydroxyalkanoate in at least one of the cover layers B and C was produced by microorganisms in a fermentation process and/or by chemical synthesis,
and/or **in that** the cover layers B and C each contain at least one polyhydroxyalkanoate,
and/or **in that** the at least one thermoplastic polymer of the cover layers B and/or C is the polyhydroxyalkanoate,
and/or **in that** the at least one thermoplastic polymer of the central layer A is selected from the group consisting of thermoplastic starch, starch-containing thermoplastics, polyvinyl alcohol, thermoplastic polyvinyl alcohol, polyvinyl acetate, polyethylene glycol, cellulose acetate, ethyl cellulose, hydroxypropyl cellulose, hydroxypropyl methylcellulose, poly(vinylpyrrolidone), poly(3-hydroxybutanoate), poly(3-hydroxyvalerate), poly(3-hydroxyhexanoate), poly(3-hydroxybutyrate-co-3-hydroxyvalerate), poly(3-hydroxybutyrate-co-3-hydroxyhexanoate), polylactic acid, polycaprolactone, polybutylene succinate, poly(butylene adipate-co-succinate), aromatic-aliphatic copolyester, poly(butylene adipate-co-terephthalate), poly(butylene sebacate co-terephthalate) and mixtures thereof.

5. Polymer film according to any of the preceding claims, **characterized in that** the cover layers B and/or C each contain at least 40%, in particular at least 45% or 50% bio-based carbon according to ASTM D6866, based on the total amount of carbon of the respective cover layers,
and/or **in that** the cover layers B and/or C are biodegradable according to ISO 15985 and/or according to ISO 14855 to in each case at least 40%, in particular at least 45% or at least 50%, at least 60%, at least 80%, at least 90% or at least 95%,
and/or **in that** the central layer A is biodegradable according to ISO 15985 and/or according to ISO 14855 to at least 40%, at least 50%, at least 60%, at least 70%, at least 80%, at least 90% or at least 95%.

6. Polymer film according to any of the preceding claims, **characterized in that** when dry, the polymer film has an elongation at tear in extrusion direction (MD) according to EN ISO 527 of 100% or more, in particular of 150% or more, 180% or more, 200% or more, 220% or more or 250% or more,
and/or **in that** when dry, the polymer film has an elongation at tear transverse to the extrusion direction (TD) according to EN ISO 527 of 100% or more, in particular 150% or more, 180% or more, 200% or more, 220% or more or 250% or more,
and/or **in that** when dry, the polymer film has a specific dart drop value according to ASTM D1709 of at least 5 g/µm.

7. Polymer film according to any of the preceding claims, **characterized in that** the cover layers B and/or C disintegrate, independently of one another, in aqueous solution within a maximum of 14 days, in particular within a maximum of 10 days or a maximum of 7 days, into parts having a surface area of in each case a maximum of 60% of the total surface area of the original polymer film,
and/or **in that** the cover layers B and/or C disintegrate, independently of one another, in aqueous solution within a maximum of 14 days, in particular within a maximum of 10 days or a maximum of 7 days, into parts having a surface area of in each case a maximum of 100 cm²,
and/or **in that** the cover layers B and/or C, independently of one another, have points having a lower resistance to mechanical forces and/or to aqueous solutions,
and/or **in that** the cover layers B and/or C, independently of one another, contain a water-soluble polymer,
and/or **in that** the surfaces of the cover layers B and/or C, independently of one another, have a furrowed surface.

8. Polymer film according to any of the preceding claims, **characterized in that** the polymer film has a total thickness of 10 µm to 80 µm, in particular 20 µm to 60 µm, 20 µm to 40 µm, 20 µm to 35 µm or 25 to 35 µm,
and/or **in that** the central layer A of the polymer film constitutes 30% to 90%, in particular 40% to 85%, 40% to 80% or 60% to 80% of the total thickness of the polymer film,
and/or **in that** the cover layers B and C of the polymer film together constitute 10% to 70%, in particular 15% to 60%, 20% to 60% or 20% to 40% of the total thickness of the polymer film.

9. Polymer film according to any of the preceding claims, **characterized in that** when dry, the cover layers B and/or C each have a specific dart drop value according to ASTM D1709 of at least 5 g/µm,
and/or **in that** the cover layers B and/or C, independently of one another, have a tensile strength in extrusion direction (MD) of at least 10 MPa, in particular at least 15 MPa or at least 20 MPa, according to EN ISO 527, and/or **in that** the cover layers B and/or C, independently of one another, have a tensile strength transverse to the extrusion direction (TD) of at least 10 MPa, in particular at least 15 MPa or at least 20 MPa, according to EN ISO 527,
and/or **in that** the cover layers B and/or C independently of one another have an elongation at tear in extrusion direction (MD) of at least 100%, in particular at least 150%, at least 180% or at least 200%, according to EN ISO 527, and/or **in that** the cover layers B and/or C, independently of one another, have an elongation at tear transverse to the extrusion direction (TD) of at least 100%, in particular at least 150%, at least 180% or at least 200%, according to EN ISO 527,
and/or **in that** the cover layers B and C are identical,
and/or **in that** the central layer A has a tensile strength in extrusion direction (MD) of at least 10 MPa, in particular at least 15 MPa, according to EN ISO 527,
and/or **in that** the central layer A has a tensile strength transverse to the extrusion direction (TD) of at least 10 MPa, in particular at least 15 MPa, according to EN ISO 527,
and/or **in that** the central layer A has an elongation at tear in extrusion direction (MD) of at least 100%, in particular at least 150%, or at least 200%, according to EN ISO 527,
and/or **in that** the central layer A has an elongation at tear transverse to the extrusion direction (TD) of at least 100%, in particular at least 150% or at least 200%, according to EN ISO 527.

10. Use of a polymer film according to any of claims 1 to 9 for producing molded parts, films or bags.

11. Molded part, film or bag, made from a multilayer polymer film according to any of claims 1 to 9.

## Revendications

1. Film polymère multicouche comprenant au moins une couche centrale A, dont les constituants polymères sont solubles en solution aqueuse, et respectivement au moins une couche de recouvrement B, C, sensiblement imperméable à l'eau, agencée au-dessus et au-dessous de l'au moins une couche centrale A, les couches A, B et C contenant respectivement, indépendamment les unes des autres, au moins un polymère thermoplastique, **caractérisé en ce que** la couche A présente une résistance à la traction, selon la norme EN ISO 527, d'au moins 15 MPa et les couches B et C présentent respectivement une résistance à la traction, selon la norme EN ISO 527, d'au moins 20 MPa, au moins l'une des couches de recouvrement B et/ou C contenant du poly(alcool vinylique).

2. Film polymère selon la revendication 1, **caractérisé en ce que** les couches de recouvrement B et/ou C contiennent, indépendamment l'une de l'autre, un ou plusieurs agents de désintégration choisis dans le groupe constitué d'hydrogénocarbonate de sodium, acide alginique, alginate de calcium, alginate de sodium, cellulose microcristalline, carboxyméthylcellulose sodique, carboxyméthylamidon sodique, polyvinylpyrrolidone et leurs mélanges.

3. Film polymère selon la revendication 1 ou 2, **caractérisé en ce qu'**au moins l'une des couches de recouvrement B et C contient au moins un polyhydroxyalcanoate.

4. Film polymère selon l'une des revendications précédentes,
**caractérisé en ce que** le polyhydroxyalcanoate est contenu dans au moins l'une des couches de recouvrement B et C en une quantité d'au moins 10 % en poids, en particulier d'au moins 15 % en poids ou 20 % en poids, par rapport au poids total de la couche de recouvrement respective,
et/ou **en ce que** l'au moins un polymère thermoplastique respectif des couches de recouvrement B et C peut être désintégré de manière hydrolytique,
et/ou **en ce que** l'au moins un polymère thermoplastique respectif des couches de recouvrement B et C est choisi, indépendamment l'une de l'autre, dans le groupe constitué d'amidon thermoplastique, thermoplastiques contenant de l'amidon, poly(alcool vinylique), poly(alcool vinylique) thermoplastique, poly(acétate de vinyle), poly(3-hydroxybutanoate), poly(3-hydroxyvalérate), poly(3-hydroxyhexanoate), poly(3-hydroxybutyrate-co-3-hydroxyvalérate), poly(3-hydroxybutyrate-co-3-hydroxyhexanoate), poly(acide lactique), polycaprolactone, poly(succinate de butylène), poly(adipate-co-succinate de butylène), copolyesters aromatiquesaliphatiques, poly(adipate-co-téréphtalate de butylène), poly(sébacate-co-téréphtalate de butylène) et leurs mélanges,
et/ou **en ce que** le polyhydroxyalcanoate dans au moins l'une des couches de recouvrement B et C est choisi dans le groupe constitué de poly(3-hydroxybutanoate), poly(3-hydroxyvalérate), poly(3-hydroxyhexanoate), poly(3-hydroxybutyrate-co-3-hydroxyvalérate), poly(3-hydroxybutyrate-co-3-hydroxyhexanoate) et leurs mélanges,
et/ou **en ce que** le polyhydroxyalcanoate dans au moins l'une des couches de recouvrement B et C a été produit par des micro-organismes au cours d'un processus de fermentation et/ou par synthèse chimique,
et/ou **en ce que** les couches de recouvrement B et C contiennent respectivement au moins un polyhydroxyalcanoate,
et/ou **en ce que** l'au moins un polymère thermoplastique des couches de recouvrement B et/ou C est le polyhydroxyalcanoate,
et/ou **en ce que** l'au moins un polymère thermoplastique de la couche centrale A est choisi dans le groupe constitué d'amidon thermoplastique, thermoplastiques contenant de l'amidon, poly(alcool vinylique), poly(alcool vinylique) thermoplastique, poly(acétate de vinyle), polyéthylèneglycol, acétate de cellulose, éthylcellulose, hydroxypropylcellulose, hydroxypropylméthylcellulose, poly(vinylpyrrolidone), poly(3-hydroxybutanoate), poly(3-hydroxyvalérate), poly(3-hydroxyhexanoate), poly(3-hydroxybutyrate-co-3-hydroxyvalérate), poly(3-hydroxybutyrate-co-3-hydroxyhexanoate), poly(acide lactique), polycaprolactone, poly(succinate de butylène), poly(adipate-co-succinate de butylène), copolyesters aromatiquesaliphatiques, poly(adipate-co-téréphtalate de butylène), poly(sébacate-co-téréphtalate de butylène) et leurs mélanges.

5. Film polymère selon l'une des revendications précédentes,
**caractérisé en ce que** les couches de recouvrement B et/ou C contiennent, selon la norme ASTM D6866, respectivement au moins 40 %, en particulier au moins 45 % ou 50 %, de carbone d'origine biologique, par rapport à la quantité totale de carbone des couches de recouvrement respectives,
et/ou **en ce que** les couches de recouvrement B et/ou C sont respectivement, selon la norme ISO 15985 et/ou la norme ISO 14855, biodégradables à raison d'au moins 40 %, en particulier d'au moins 45 % ou d'au moins 50 %, d'au moins 60 %, d'au moins 80 %, d'au moins 90 % ou d'au moins 95 %,
et/ou **en ce que** la couche centrale A est, selon la norme ISO 15985 et/ou la norme ISO 14855, biodégradable à raison d'au moins 40 %, d'au moins 50 %, d'au moins 60 %, d'au moins 70 %, d'au moins 80 %, d'au moins 90 % ou d'au moins 95 %.

6. Film polymère selon l'une des revendications précédentes,
**caractérisé en ce que** le film polymère présente, à l'état sec, un allongement à la rupture dans la direction d'extrusion (MD), selon la norme EN ISO 527, de 100 % ou plus, en particulier de 150 % ou plus, de 180 % ou plus, de 200 % ou plus, de 220 % ou plus ou de 250 % ou plus, et/ou **en ce que** le film polymère présente, à l'état sec, un allongement à la rupture transversalement à la direction d'extrusion (TD), selon la norme EN ISO 527, de 100 % ou plus, en particulier de 150 % ou plus, de 180 % ou plus, de 200 % ou plus, de 220 % ou plus ou de 250 % ou plus, et/ou **en ce que** le film polymère présente, à l'état sec, une valeur de projectile en chute libre (dart drop) spécifique, selon la norme ASTM D1709, d'au moins 5 g/µm.

7. Film polymère selon l'une des revendications précédentes,
**caractérisé en ce que** les couches de recouvrement B et/ou C se désintègrent, indépendamment l'une de l'autre, en solution aqueuse en un délai d'au plus 14 jours, en particulier en un délai d'au plus 10 jours ou en un délai d'au plus 7 jours, en fragments dont la surface respective est d'au plus 60 % de la surface totale du film polymère d'origine,
et/ou **en ce que** les couches de recouvrement B et/ou C se désintègrent, indépendamment l'une de l'autre, en solution aqueuse en un délai d'au plus 14 jours, en particulier en un délai d'au plus 10 jours ou d'au plus 7 jours, en fragments dont la surface respective est d'au plus 100 cm²,
et/ou **en ce que** les couches de recouvrement B et/ou C présentent, indépendamment l'une de l'autre, des zones d'une résistance moindre aux sollicitations mécaniques et/ou aux solutions aqueuses,
et/ou **en ce que** les couches de recouvrement B et/ou C contiennent, indépendamment l'une de l'autre, un polymère soluble dans l'eau, et/ou **en ce que** les surfaces des couches de recouvrement B et/ou C présentent, indépendamment l'une de l'autre, une surface striée.

8. Film polymère selon l'une des revendications précédentes,
**caractérisé en ce que** le film polymère présente une épaisseur totale de 10 µm à 80 µm, en particulier de 20 µm à 60 µm, de 20 µm à 40 µm, de 20 µm à 35 µm ou de 25 à 35 µm,
et/ou **en ce que** la couche centrale A du film polymère représente 30 % à 90 %, en particulier 40 % à 85 %, 40 % à 80 % ou 60 % à 80 %, de l'épaisseur totale du film polymère,
et/ou **en ce que** les couches de recouvrement B et C du film polymère représentent ensemble 10 % à 70 %, en particulier 15 % à 60 %, 20 % à 60 % ou 20 % à 40 %, de l'épaisseur totale du film polymère.

9. Film polymère selon l'une des revendications précédentes,
**caractérisé en ce que** les couches de recouvrement B et/ou C présentent, à l'état sec, respectivement une valeur de projectile en chute libre (dart drop) spécifique d'au moins 5 g/µm, selon la norme ASTM D1709,
et/ou **en ce que** les couches de recouvrement B et/ou C présentent, indépendamment l'une de l'autre, une résistance à la traction dans la direction d'extrusion (MD) d'au moins 10 MPa, en particulier d'au moins 15 MPa ou d'au moins 20 MPa, selon la norme EN ISO 527,
et/ou **en ce que** les couches de recouvrement B et/ou C présentent, indépendamment l'une de l'autre, une résistance à la traction transversalement à la direction d'extrusion (TD) d'au moins 10 MPa, en particulier d'au moins 15 MPa ou d'au moins 20 MPa, selon la norme EN ISO 527,
et/ou **en ce que** les couches de recouvrement B et/ou C présentent, indépendamment l'une de l'autre, un allongement à la rupture dans la direction d'extrusion (MD) d'au moins 100 %, en particulier d'au moins 150 %, d'au moins 180 % ou d'au moins 200 %, selon la norme EN ISO 527, et/ou **en ce que** les couches de recouvrement B et/ou C présentent, indépendamment l'une de l'autre, un allongement à la rupture transversalement à la direction d'extrusion (TD) d'au moins 100 %, en particulier d'au moins 150 %, d'au moins 180 % ou d'au moins 200 %, selon la norme EN ISO 527,
et/ou **en ce que** les couches de recouvrement B et C sont identiques, et/ou **en ce que** la couche centrale A présente une résistance à la traction dans la direction d'extrusion (MD) d'au moins 10 MPa, en particulier d'au moins 15 MPa, selon la norme EN ISO 527,
et/ou **en ce que** la couche centrale A présente une résistance à la traction transversalement à la direction d'extrusion (TD) d'au moins 10 MPa, en particulier d'au moins 15 MPa, selon la norme EN ISO 527,
et/ou **en ce que** la couche centrale A présente un allongement à la rupture dans la direction d'extrusion (MD) d'au moins 100 %, en particulier d'au moins 150 % ou d'au moins 200 %, selon la norme EN ISO 527,
et/ou **en ce que** la couche centrale A présente un allongement à la rupture transversalement à la direction d'extrusion (TD) d'au moins 100 %, en particulier d'au moins 150 % ou d'au moins 200 %, selon la norme EN ISO 527.

10. Utilisation d'un film polymère selon l'une des revendications 1 à 9 pour la fabrication des pièces moulées, des films ou des sachets.

11. Pièce moulée, film ou sachet, fabriqué à partir d'un film polymère multicouche selon l'une des revendications 1 à 9.
